# EUROPEAN PATENT APPLICATION

(11) **EP 2 708 562 A1**
(43) Date of publication of application: **19.03.2014**
(21) Application number: 12782831.7
(22) Date of filing: 09.05.2012
(51) Int. Cl.: C08F 4/54, C08F 212/04, C08F 236/08, C08F 297/06

(54) **MANUFACTURING METHOD FOR MULTIDIMENSIONAL POLYMER, AND MULTIDIMENSIONAL POLYMER**

(30) Priority: 09.05.2011 JP 2011104790
(71) Applicant: Riken, Saitama 351-0198 (JP)
(72) Inventor: HOU, Zhaomin, Wako-shi, Saitama 351-0198 (JP); PAN, Li, Wako-shi, Saitama 351-0198 (JP)
(74) Representative: Cabinet Plasseraud
(86) International application number: PCT/JP2012/061922
(87) International publication number: WO 2012/153786

(57) **Abstract**

A multidimensional polymer production method for producing a multidimensional polymer containing a repeating unit derived from a first monomer and a repeating unit derived from a second monomer, the multidimensional polymer production method including the steps of: (a) using a first catalyst and a second catalyst; and (b) carrying out a polymerization reaction in the presence of the first catalyst, the second catalyst, the first monomer, the second monomer, and a chain shuttling agent in an identical reaction system, the first catalyst selectively catalyzing a positionally selective or stereoselective polymerization reaction of the first monomer per se, and the second catalyst selectively catalyzing a positionally selective or stereoselective polymerization reaction of the second monomer per se.

## Description

### Technical Field

The present invention relates to (i) a method for producing a multidimensional block copolymer by use of a chain shuttling agent and (ii) a multidimensional block copolymer.

### Background Art

Physical properties of a polymer material greatly depend on positional regularity or stereoregularity of the polymer material. In view of this, a technique has been developed for highly controlling positional regularity or stereoregularity of a polymer to be obtained. Patent Literature 1 discloses an example of such a technique in which a polymerization reaction carried out by use of a metallocene complex makes it possible to produce a syndiotactic styrene polymer (sPS).

Alternatively, physical properties of a polymer material are improved by producing a copolymer by polymerizing two or more kinds of monomers which differ in property.

Citation List

### Patent Literatures

Patent Literature 1
International Publication No. WO 00/18808 (Publication Date: April 6, 2000)

### Non Patent Literatures

Non Patent Literature 1
D. J. Arriola, E. M. Carnahan, P. D. Hustad, R. L. Kuhlman, T. T. Wenzel, Science, 2006, 312, 714.

### Summary of Invention

### Technical Problem

However, in a case where two or more kinds of monomers are polymerized, it is extremely difficult to produce a copolymer while highly controlling positional regularity or stereoregularity of a repeating unit derived from the respective monomers.

For example, Non Patent Literature 1 reports an example in which a copolymer containing a syndiotactic styrene chain is synthesized by copolymerizing a styrene monomer and an isoprene monomer. However, isoprene-derived repeating units of the copolymer have a random structure, and are not positionally controlled or stereocontrolled.

The present invention has been made in view of the problems, and an object of the present invention is to provide (i) a novel method for producing a multidimensional block copolymer by use of a chain shuttling agent and (ii) a multidimensional block copolymer.

### Solution to Problem

Inventors of the present invention carried out diligent study so as to solve the problems. As a result, the inventors finally attained the present invention by finding that a highly positionally controlled or stereocontrolled multidimensional polymer can be obtained by using (i) a difference in catalyst activity to different monomers and (ii) a chain shuttling agent.

Namely, the present invention includes the following:
<1> A multidimensional polymer production method for producing a multidimensional polymer containing a repeating unit derived from a first monomer and a repeating unit derived from a second monomer different from the first monomer, the multidimensional polymer production method including the steps of: (a) using a first catalyst and a second catalyst; and (b) carrying out a polymerization reaction in the presence of the first catalyst, the second catalyst, the first monomer, the second monomer, and a chain shuttling agent in an identical reaction system, the first catalyst more selectively catalyzing a positionally selective or stereoselective polymerization reaction of the first monomer per se than catalyzing a polymerization reaction of the second monomer per se and a polymerization reaction of the first monomer and the second monomer, and the second catalyst more selectively catalyzing a positionally selective or stereoselective polymerization reaction of the second monomer per se than catalyzing a polymerization reaction of the first monomer per se and the polymerization reaction of the first monomer and the second monomer.
<2> The multidimensional polymer production method mentioned in <1>, wherein the first monomer is a styrene-type monomer and the second monomer is an isoprene or a butadiene.
<3> The multidimensional polymer production method mentioned in <2>, wherein the first catalyst is a catalyst composition containing: (1) a metallocene complex containing: a central metal M which is a group 3 metal atom or a lanthanoid metal atom; a ligand Cp* containing a substituted or unsubstituted cyclopentadienyl derivative bonded with the central metal M; monoanion ligands Q¹ and Q²; and a neutral Lewis base(s) L whose number is W (W is an integer of 0 to 3); and (2) an ionic compound containing a noncoordinating anion and a cation,
   the metallocene complex being represented by general formula (I): 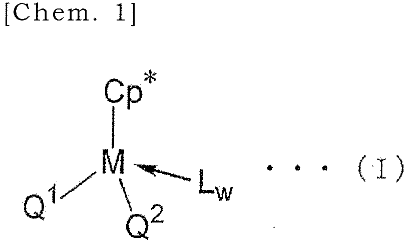 wherein the ligand Cp* is any one selected from the group consisting of a substituted cyclopentadienyl ring, a substituted or unsubstituted fluorenyl ring, a substituted or unsubstituted octahydrofluorenyl ring; and an indenyl ring containing a substituent;
   in a case where Cp* is the substituted cyclopentadienyl ring, Cp* is represented by the following general formula (II): 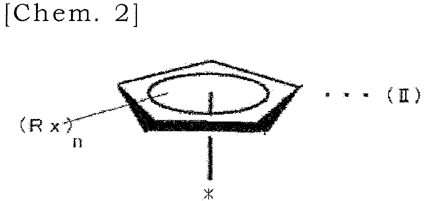 wherein Rx represents a C₁ to C₂₀ hydrocarbyl group or a metalloid group which is substituted by the C₁ to C₂₀ hydrocarbyl group, the C₁ to C₂₀ hydrocarbyl group or the metalloid group being bonded with a carbon atom in a skeleton of the cyclopentadienyl ring; * represents a bond with M; n is an integer of 3 to 5; and one of the carbon atoms constituting the skeleton of the cyclopentadienyl ring represented by general formula (II) may be substituted by a group 14 atom (excluding a carbon atom and a lead atom) or a group 15 atom; and
   in a case where Cp* is an indenyl ring containing a substituent, Cp* is represented by the following general formula (III): 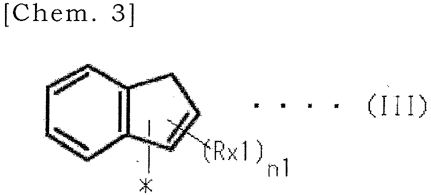 wherein Rx1 represents a C₁ to C₂₀ hydrocarbyl group or a metalloid group which is substituted by the C₁ to C₂₀ hydrocarbyl group, the C₁ to C₂₀ hydrocarbyl group or the metalloid group being bonded with carbon atoms constituting a skeleton of 5 membered rings of the indenyl ring; * represents a bond with M; and n1 is an integer of 1 to 3.
<4> The multidimensional polymer production method mentioned in <2> or <3>, wherein the second catalyst is a catalyst composition containing:
   (1) a metallocene complex containing: a central metal M which is a group 3 metal atom or a lanthanoid metal atom; a ligand Cp* containing a substituted or unsubstituted cyclopentadienyl derivative bonded with the central metal M; monoanion ligands Q¹ and Q²; and a neutral Lewis base(s) L whose number is W (W is an integer of 0 to 3); and
   (2) an ionic compound containing a noncoordinating anion and a cation,
      the metallocene complex being represented by general formula (I): 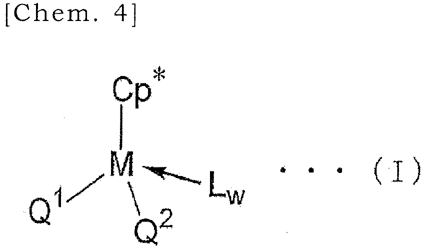 wherein the ligand Cp* is any one selected from the group consisting of a substituted or unsubstituted cyclopentadienyl ring and an unsubstituted indenyl ring; and
      in a case where Cp* is the substituted cyclopentadienyl ring, Cp* is represented by the following general formula (IV): 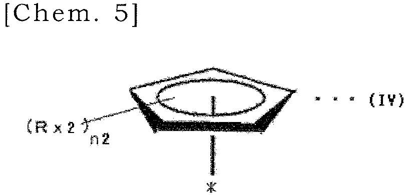 wherein Rx2 represents a C₁ to C₃ hydrocarbyl group bonded with a carbon atom in a skeleton of the cyclopentadienyl ring; * represents a bond with M; and n2 is an integer of 1 to 2.
<5> The multidimensional polymer production method mentioned in <2> or <3>, wherein the second catalyst is a catalyst composition containing:
   (1) a complex; and
   (2) an ionic compound containing a noncoordinating anion and a cation,
      the complex being represented by general formula (V): 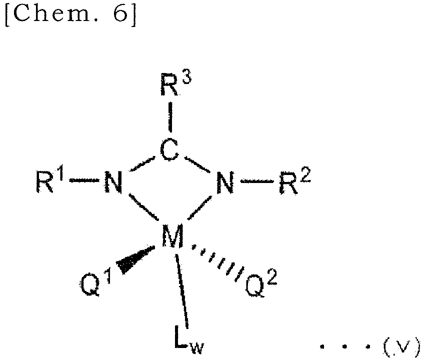
      wherein R¹ and R² independently represent an alkyl group; or a cyclohexyl group, an aryl group, or an aralkyl group;
      R³ represents an alkyl group; an alkenyl group; an alkynyl group; an aryl group or an aralkyl group; an aliphatic, aromatic, or cyclic amino group; a phosphino group; a boryl group; an alkylthio or arylthio group; or an alkoxy or aryloxy group;
      M is scandium (Sc), yttrium (Y), or any one of rare earth elements from lanthanum (La) to lutetium (Lu) except promethium Pm; and
      Q¹ and Q² independently represent a monoanion ligand, L represents a neutral Lewis base(s), and w is an integer of 0 to 3.
<6> The multidimensional polymer production method mentioned in <5>, wherein in the general formula (V), R¹ and R² each represent a 2,6-diisopropylphenyl group and R³ is a phenyl group.
<7> The multidimensional polymer production method mentioned in <2> or <3>, wherein the second catalyst is a catalyst composition containing:
   (1) a complex containing: a central metal M which is a group 3 metal atom or a lanthanoid metal atom; and a ligand Cp* containing a substituted or unsubstituted cyclopentadienyl derivative bonded with the central metal M; and
   (2) an ionic compound containing a noncoordinating anion and a cation,
      the complex being represented by general formula (VI): 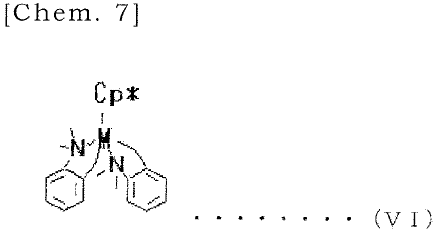 wherein the ligand Cp* is any one selected from the group consisting of a substituted or unsubstituted cyclopentadienyl ring and an unsubstituted indenyl ring; and
      in a case where Cp* is the substituted cyclopentadienyl ring, Cp* is represented by the following general formula (IV): 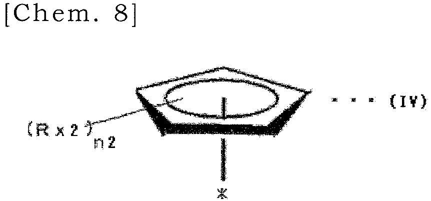 wherein Rx2 represents a C₁ to C₃ hydrocarbyl group bonded with a carbon atom in a skeleton of the cyclopentadienyl ring; * represents a bond with M; and n2 is an integer of 1 to 2.
<8> The multidimensional polymer production method mentioned in any one of <3> through <7>, wherein the central metal M is scandium (Sc) or yttrium (Y).
<9> The multidimensional polymer production method mentioned in <8>, wherein the central metal M is scandium (Sc).
<10> The multidimensional polymer production method mentioned in any one of <3> through <6>, wherein Q¹ and Q² independently represent a trialkylsilyl group.
<11> The multidimensional polymer production method mentioned in any one of <3> through <6>, wherein the neutral Lewis base(s) L is/are tetrahydrofuran(s).
<12> The multidimensional polymer production method mentioned in any one of <2> through <11>, wherein a polymer block obtained by polymerizing the styrene-type monomer per se has a side chain which contains aromatic groups having syndiotactic stereoregularity, and syndiotacticity exhibited by the polymer block is not less than 80 rrrr%.
<13> The multidimensional polymer production method mentioned in any one of <2> through <12>, wherein a polymer block obtained by polymerizing the styrene-type monomer per se is poly(alkylated) styrene or polyvinyl naphthalene.
<14> The multidimensional polymer production method mentioned in any one of <2> through <13>, wherein the chain shuttling agent is trialkylaluminum.
<15> A multidimensional polymer which is produced by a multidimensional polymer production method recited in any one of <1> through <14>, the multidimensional polymer including: a first polymer block obtained by polymerizing the first monomer per se; and a second polymer block obtained by polymerizing the second monomer per se, the first polymer block and the second polymer block each having given positional regularity or stereoregularity.

### Advantageous Effects of Invention

The present invention makes it possible to provide (i) a highly positionally controlled or stereocontrolled multidimensional polymer and (ii) a method for producing the multidimensional polymer.

### Brief Description of Drawings

Fig. 1 illustrates, in Part A-1 of Examples, GPC graphs of run 1 (with no chain shuttling agent) and run 2 (TIBA/Sc=5) each shown in Table 1.
Fig. 2 illustrates, in Part A-1 of Examples, GPC graphs of run 1 (with no chain shuttling agent) and run 8 (TPA/Sc=2) each shown in Table 1.
Fig. 3 illustrates, in Part A-1 of Examples, a ¹H NMR spectrum of run 1 (with no chain shuttling agent) shown in Table 1.
Fig. 4 illustrates, in Part A-1 of Examples, a ¹H NMR spectrum of run 2 (TIBA/Sc=5) shown in Table 1.
Fig. 5 illustrates, in Part A-1 of Examples, a ¹³C NMR spectrum of run 2 (TIBA/Sc=5) shown in Table 1.
Fig. 6 illustrates, in Part A-1 of Examples, a DSC curve of a block copolymer (run 3 shown in Table 1).
Fig. 7 illustrates, in Part A-2 of Examples, a GPC graph of run 1 (with no chain shuttling agent) shown in Table 2.
Fig. 8 illustrates, in Part A-2 of Examples, a GPC graph of run 2 (TIBA/Sc=5) shown in Table 2.
Fig. 9 illustrates, in Part A-2 of Examples, a ¹H NMR spectrum of run 1 (with no chain shuttling agent) shown in Table 2.
Fig. 10 illustrates, in Part A-2 of Examples, a ¹H NMR spectrum of run 2 (TIBA/Sc=5, IP/St=2) shown in Table 2.
Fig. 11 illustrates, in Part B of Examples, a ¹H NMR spectrum of run 1 (with no chain shuttling agent) shown in Table 3.
Fig. 12 illustrates, in Part B of Examples, a ¹H NMR spectrum of run 3 (TIBA/Sc=10) shown in Table 3.
Fig. 13 illustrates, in Part B of Examples, a ¹H NMR spectrum of run 7 (TPA/Sc=5) shown in Table 3.
Fig. 14 illustrates, in Part C of Examples, a GPC graph of run 2 (TIBA/Sc=5) shown in Table 4.
Fig. 15 illustrates, in Part C of Examples, a ¹³C NMR spectrum of run 2 (TIBA/Sc=5) shown in Table 4.
Fig. 16 illustrates, in Part C of Examples, a ¹³C NMR spectrum of run 4 shown in Table 4.
Fig. 17 illustrates respective structural formulae of complexes used in Examples, respective general reactions with the complexes, and respective reactions with the complexes in the Examples.

### Description of Embodiments

### [1. Multidimensional Polymer Production Method of the Present Invention]

### (Summary of the Multidimensional Polymer Production Method)

A multidimensional polymer production method of the present invention is a method for producing a multidimensional polymer containing a repeating unit derived from a first monomer and a repeating unit derived from a second monomer different from the first monomer, the multidimensional polymer production method including the steps of: (a) using a first catalyst and a second catalyst; and (b) carrying out a polymerization reaction in the presence of the first catalyst, the second catalyst, the first monomer, the second monomer, and a chain shuttling agent in an identical reaction system, the first catalyst more selectively catalyzing a positionally selective or stereoselective polymerization reaction of the first monomer per se than catalyzing a polymerization reaction of the second monomer per se and a polymerization reaction of the first monomer and the second monomer, and the second catalyst more selectively catalyzing a positionally selective or stereoselective polymerization reaction of the second monomer per se than catalyzing a polymerization reaction of the first monomer per se and the polymerization reaction of the first monomer and the second monomer.

The multidimensional polymer production method of the present invention makes it possible to obtain a novel block copolymer containing (i) a first polymer block that is a resulting product of the positionally selective or stereoselective polymerization reaction of the first monomer per se which reaction is catalyzed by the first catalyst and (ii) a second polymer block that is a resulting product of the positionally selective or stereoselective polymerization reaction of the second monomer per se which reaction is catalyzed by the second catalyst. The first polymer block and the second polymer block each have given positional regularity or stereoregularity.

Note that the scope of the multidimensional polymer production method encompasses the step of obtaining a multidimensional not less than three-dimensional polymer by carrying out a polymerization reaction in which another monomer (for convenience, referred to as a third monomer) in addition to the first monomer and the second monomer are further added. Note here that a polymerization reaction of the third monomer is preferably catalyzed by the first catalyst or the second catalyst.

### (Example of Determination of Combination)

For example, a combination of the first catalyst, the second catalyst, the first monomer, and the second monomer is determined as described below. A person skilled in the art can determine the combination in accordance with the following description.

First, any combination of the first monomer and the second monomer is selected as monomers constituting a block copolymer. Then, a catalyst A (a candidate for the first catalyst) which catalyzes the positionally selective or stereoselective polymerization reaction of the first monomer per se is selected in accordance with literature information or a preliminary experiment. Subsequently, in accordance with the literature information on the catalyst A, it is determined whether or not the catalyst A has a capability of catalyzing the polymerization reaction of the second monomer per se or a capability of catalyzing the polymerization reaction of the first monomer and the second monomer. In a case where neither of the capabilities is particularly reported, it is determined that the catalyst A is suitable as the first catalyst. Similarly, a catalyst B (a candidate for the second catalyst) which catalyzes the positionally selective or stereoselective polymerization reaction of the second monomer per se is selected in accordance with literature information or a preliminary experiment. Subsequently, in accordance with the literature information on the catalyst B, it is determined whether or not the catalyst B has a capability of catalyzing the polymerization reaction of the first monomer per se or a capability of catalyzing the polymerization reaction of the first monomer and the second monomer. In a case where neither of the capabilities is particularly reported, it is determined that the catalyst B is suitable as the second catalyst. Note that the scope of the literature information encompasses database information. The chain shuttling agent is appropriately selectable from conventional chain shuttling agents.

### (Determination of Structure of Obtained Multidimensional Polymer)

A multidimensional copolymer obtained by the multidimensional polymer production method of the present invention preferably contains at least one first polymer block obtained by polymerizing the first monomer per se and at least one second polymer block obtained by polymerizing the second monomer per se, and the at least one first polymer block and the at least one second polymer block each exhibit given positional regularity or stereoregularity. Note here that positional regularity and stereoregularity are not particularly limited in kind. From one viewpoint, positional regularity and stereoregularity each indicate a property such as syndiotacticity or isotacticity, i.e., a non-atacticity. Alternatively, from another viewpoint, positional regularity and stereoregularity each indicate cis-selectivity or trans-selectivity. Further, for example, positional regularity and stereoregularity each indicate that only a repeating unit having a specific chemical structure is preferentially selected in a case where one monomer may be introduced into a polymer as a plurality of kinds of a repeating unit which differ in chemical structure. For example, a case where positional regularity and stereoregularity are exhibited is exemplified by a case where isoprene may be introduced into a polymer as a cis-1,4 or iso-3,4 repeating unit, and an isoprene block contained in the polymer is substantially constituted by only the cis-1,4 repeating unit.

Note that it is only necessary to employ a publicly-known method so as to determine whether a polymer block constituting an obtained multidimensional copolymer has either positional regularity or stereoregularity described above. For example, positional regularity or stereoregularity such as syndiotacticity or isotacticity can be determined by calculation based on an NMR spectrum (especially a ¹³C-NMR spectrum). Note that a polymer exhibiting positional regularity or stereoregularity is obtained as a result of a positionally selective or stereoselective polymerization reaction of a monomer.

The following description more specifically discusses a case to which the present invention is applied to production of a copolymer containing a polymer block obtained by polymerizing a styrene-type monomer per se, and a polymer block obtained by polymerizing an isoprene per se and/or a polymer block obtained by polymerizing a butadiene per se.

### [2. Example (1) of the Multidimensional Polymer Production Method of the Present Invention]

### <Outline of the Multidimensional Polymer Production Method>

This example (1) uses (i) a styrene-type monomer as the first monomer and (ii) an isoprene and/or a butadiene as the second monomer. Further, the example (1) uses a catalyst composition (A1) (described later) as a first catalyst which catalyzes a positionally selective or stereoselective polymerization reaction of the styrene-type monomer per se. In addition, the example (1) uses a catalyst composition (B1) (described later) as a second catalyst which catalyzes a positionally selective or stereoselective polymerization reaction of the isoprene per se and/or the butadiene per se.

The catalyst composition (A1) is extremely low in selectivity to a polymerization reaction of the isoprene per se, a polymerization reaction of the butadiene per se, and a polymerization reaction of (a) each of the isoprene and the butadiene and (b) the styrene-type monomer while catalyzing a syndiotactic polymerization reaction of the styrene-type monomer per se (namely, there is a clear difference in polymerization activity).

The catalyst composition (B1) is extremely low in selectivity (catalytic effect) to the polymerization reaction of (a) each of the isoprene and the butadiene and (b) the styrene-type monomer, and selectivity (catalytic effect) to a polymerization reaction of the styrene-type monomer per se while catalyzing the polymerization reaction of the isoprene per se or the polymerization reaction of the butadiene per se (namely, there is a clear difference in polymerization activity).

Then, the example (1) carries out a polymerization reaction in the presence of the catalyst composition (A1), the catalyst composition (B1), the styrene-type monomer, the isoprene and/or the butadiene, and the chain shuttling agent in an identical reaction system. As a result of the polymerization reaction, a multidimensional polymer is obtained which contains (i) a syndiotactic polystyrene block and (ii) a polyisoprene block and/or a polybutadiene block which are/is provided with given positional regularity or stereoregularity.

### <Catalyst Composition (A1)>

The catalyst composition (A1) contains 1) a metallocene complex and 2) an ionic compound containing a noncoordinating anion and a cation. The metallocene complex contains: a central metal M which is a group 3 metal atom or a lanthanoid metal atom; a ligand Cp* containing a substituted or unsubstituted cyclopentadienyl derivative bonded with the central metal M; monoanion ligands Q¹ and Q²; and a neutral Lewis base(s) L whose number is W (W is an integer of 0 to 3), and a structure of the metallocene complex is represented by the following general formula (I). The metallocene complex is preferably a half metallocene complex.

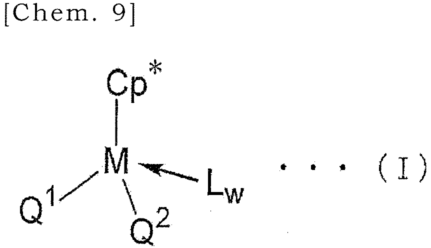

### (Metallocene Complex Represented by General Formula (I))

wherein M is a central metal of the metallocene complex. The central metal M is a group 3 metal atom or a lanthanoid metal. The metallocene complex can be used in the present invention as a component of the polymerization catalyst composition (A1). Therefore, the central metal M is appropriately selected in accordance with, for example, a kind of monomer to be polymerized. In particular, the central metal M is preferably a group 3 metal, more preferably scandium (Sc) or yttrium (Y), and still more preferably Sc.

Further, in a case where a substituted or unsubstituted styrene (styrene-type monomer) per se is polymerized, the central metal M may be any group 3 metal atom or lanthanoid metal, but is preferably Sc, Gd, Y, or Lu, and more preferably Sc.

In general formula (I), Cp* is a ligand containing a cyclopentadienyl derivative, and is π-bonded with the central metal M. The ligand is, for example, a non-crosslinking ligand. Note here that the non-crosslinking ligand refers to a ligand in which a cyclopentadienyl derivative is π-bounded with the central metal and which has no coordinating atom or no coordinating group other than the cyclopentadienyl derivative. Alternatively, the ligand is, for example, a crosslinking ligand. Note here that the crosslinking ligand refers to a ligand which has a coordinating atom or a coordinating group in addition to the cyclopentadienyl derivative.

The substituted or unsubstituted cyclopentadienyl derivative contained in Cp* is any one selected from the group consisting of a substituted cyclopentadienyl ring, a substituted or unsubstituted fluorenyl ring, a substituted or unsubstituted octahydrofluorenyl ring, and an indenyl ring containing a substituent. In particular, the most preferable cyclopentadienyl derivative is the substituted cyclopentadienyl ring.

Note here that, in a case where Cp* is the substituted cyclopentadienyl ring, Cp* is represented by the following general formula (II): 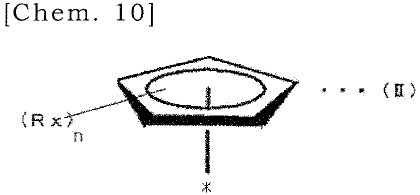 wherein Rx represents a C₁ to C₂₀ hydrocarbyl group or a metalloid group which is substituted by the C₁ to C₂₀ hydrocarbyl group, the C₁ to C₂₀ hydrocarbyl group or the metalloid group being bonded with a carbon atom in a skeleton of the cyclopentadienyl ring; * represents a bond with M; and n is an integer of 3 to 5. Note that one of the carbon atoms constituting the skeleton of the cyclopentadienyl ring represented by general formula (II) may be substituted by a group 14 atom (excluding a carbon atom and a lead atom) or a group 15 atom (hetero atom). A preferable example of the hetero atom is a nitrogen atom or a phosphorous atom.

The hydrocarbyl group is preferably a C₁ to C₂₀ hydrocarbyl group, more preferably a C₁ to C₂₀ (preferably C₁ to C₁₀, and more preferably C₁ to C₆) alkyl group, an aryl group such as a phenyl group or a naphthyl group, or a benzyl group, and most preferably a methyl group.

The hydrocarbyl group may contain a substituent (referred to as a substituted hydrocarbyl group). A hydrocarbyl group of the substituted hydrocarbyl group is similar to the hydrocarbyl group mentioned above. A substituted hydrocarbyl group is a hydrocarbyl group obtained by substituting at least one hydrogen atom of a hydrocarbyl group by a halogen atom, an amide group, a phosphido group, an alkoxy group, an aryloxy group, or the like.

Metalloid of a metalloid group which is substituted by the hydrocarbyl group is exemplified by germyl (Ge), stannyl (Sn), and silyl (Si). Further, a hydrocarbyl group which serves as a substitutent in the metalloid group is similar to the hydrocarbyl group mentioned above. The number of substitutions is determined by a kind of metalloid (for example, in the case of a silyl group, the number of substitutions of the hydrocarbyl group is 3).

At least one Rx of the cyclopentadienyl ring is preferably a metalloid group (preferably a silyl group) by which the hydrocarbyl group is substituted, and more preferably a trimethylsilyl group.

From the viewpoint of further improvement in syndiotacticity of the styrene-type monomer, n is preferably 4 or 5, and more preferably 5 in general formula (II). More specifically, the cyclopentadienyl ring represented by general formula (II) is preferably tetramethyl(trimethylsilyl)cyclopentadienyl, pentamethylcyclopentadienyl, or tetramethylcyclopentadienyl, and more preferably tetramethyl(trimethylsilyl)cyclopentadienyl or pentamethylcyclopentadienyl.

Note that, in a case where one of the carbon atoms constituting the skeleton of the cyclopentadienyl ring represented by general formula (II) is substituted by a group 14 atom (excluding a carbon atom and a lead atom) or a group 15 atom (hetero atom), the Rx may be bonded with the hetero atom.

In a case where the substituted or unsubstituted cyclopentadienyl derivative contained in Cp* is an indenyl ring containing a substituent, the substituted or unsubstituted cyclopentadienyl derivative contained in Cp* is represented by the following general formula (III): 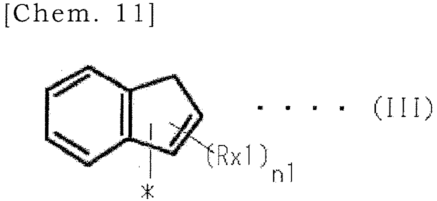 wherein Rx1 represents a C₁ to C₂₀ hydrocarbyl group or a metalloid group which is substituted by the C₁ to C₂₀ hydrocarbyl group, the C₁ to C₂₀ hydrocarbyl group or the metalloid group being bonded with carbon atoms constituting a skeleton of 5 membered rings of the indenyl ring; * represents a bond with M; and n 1 is an integer of 1 to 3.

Note that the hydrocarbyl group and the metalloid group in general formula (III) are identical in definition to those of Rx in general formula (II).

Further, at least one Rx1 of the indenyl ring is preferably a metalloid group (preferably a silyl group) by which the hydrocarbyl group is substituted, and more preferably a trimethylsilyl group.

From the viewpoint of further improvement in syndiotacticity of the styrene-type monomer, n is preferably 2 or 3, and more preferably 3 in general formula (III). More specifically, the indenyl ring represented by general formula (III) is preferably an indenyl ring in which n is 3, 3 Rx1's are all methyl groups, or 2 Rx1's are methyl groups and 1 Rx1 is a trimethylsilyl group.

The substituted or unsubstituted cyclopentadienyl derivative contained in Cp* may be a substituted or unsubstituted fluorenyl ring (composition formula: C₁₃H₉ₓRₓ) or a substituted or unsubstituted octahydrofluorenyl ring (composition formula: C₁₃H₁₇₋ₓRₓ). Note here that R is similar to Rx of the cyclopentadienyl ring represented in general formula (II) and X is an integer of 0 to 9 or 0 to 17.

Q¹ and Q² are identical or different monoanion ligands (monoanionic ligands) in the complex represented by general formula (I) and used in the present invention. A monoanion ligand is exemplified by 1) a hydride, 2) a halide, 3) a substituted or unsubstituted C₁ to C₂₀ hydrocarbyl group, 4) an alkoxy group or an aryloxy group, 5) an amide group, and 6) a phosphino group. However, the monoanion ligand is not limited to these. The scope of Q¹ and Q² also encompasses CH₂C₆H₄N(CH₃)₂-o, for example.

Q¹ and Q² may be bonded with each other or combined together to be a so-called dianionic ligand. The dianionic ligand is exemplified by alkylidene, diene, a cyclometalated hydrocarbyl group, and a bidentate chelate ligand.

The halide may be any one of a chloride, a bromide, a fluoride, and an iodide.

The C₁ to C₂₀ hydrocarbyl group may be preferably (I) an unsubstituted hydrocarbyl group such as (i) an alkyl group such as a methyl group, an ethyl group, a propyl group, a butyl group, an amyl group, an isoamyl group, a hexyl group, an isobutyl group, a heptyl group, an octyl group, a nonyl group, a decyl group, a cetyl group, or a 2-ethylhexyl group; (ii) an aryl group such as a phenyl group or a naphthyl group; or (iii) a benzyl group, or (II) a substituted hydrocarbyl group such as a substituted benzyl group, a trialkylsilylmethyl group, or a bis(trialkylsilyl)methyl group. Preferable examples of the hydrocarbyl group include a substituted or unsubstituted benzyl group and a trialkylsilylmethyl group. Further preferable examples of the hydrocarbyl group include ortho-dimethylaminobenzyl group and a trimethylsilylmethyl group.

The alkoxy group or the aryloxy group is preferably a methoxy group, a substituted or unsubstituted phenoxy group, or the like.

The amide group is preferably a dimethylamide group, diethylamide group, a methylethylamide group, di-t-butylamide group, a diisopropylamide group, a substituted or unsubstituted diphenylamide group, or the like.

The phosphino group is preferably a diphenylphosphino group, a dicyclohexylphosphino group, a diethylphosphino group, a dimethylphosphino group, or the like.

The alkylidene is preferably methylidene, ethylidene, propylidene, or the like.

The cyclometalated hydrocarbyl group is preferably propylene, butylene, pentylene, hexylene, octylene, or the like.

The diene is preferably 1,3-butadiene, 1,3-pentadiene, 1,4-pentadiene, 1,3-hexadiene, 1,4-hexadiene, 1,5-hexadiene, 2,4-dimethyl-1,3-pentadiene, 2-methyl-1,3-hexadiene, 2,4-hexadiene, or the like.

L is a neutral Lewis base in the complex represented by general formula (I) and used in the present invention. The neutral Lewis base L is exemplified by tetrahydrofuran, diethylether, dimethylaniline, trimethylphosphine, and lithium chloride.

L may be bonded with Q¹ and/or Q² to be a so-called multidentate ligand.

w of L_{w} in general formula (I) represents the number of neutral Lewis bases L. w is an integer of 0 to 3, and preferably of 0 to 1.

The metallocene complex can be synthesized in accordance with a method described in, for example, (1) Reference: Tardif, O.; Nishiura, M.; Hou, Z. M. Organometallics 22, 1171, (2003)., (2) Reference: Hultzsch, K. C.; Spaniol, T. P.; Okuda, J. Angew. Chem. Int. Ed, 38, 227, (1999)., (3) Reference: International Publication WO 2006/004068, or (4) Reference: Japanese Patent Application Publication, Tokukai, No. 2008-222780 A.

### (Ionic Compound Containing Noncoordinating Anion and Cation)

As described earlier, the catalyst composition (A1) contains an ionic compound. Note here that the ionic compound includes an ionic compound containing a noncoordinating anion and a cation. The ionic compound which is combined with the metallocene complex causes the metallocene complex to exhibit activity as a polymerization catalyst. A mechanism of this can be exemplified by a mechanism for generating a cationic complex (activated species) by causing the ionic compound to react with the metallocene complex.

For example, the noncoordinating anion, which is contained in the ionic compound, is preferably a quadrivalence boron anion, and is exemplified by tetra(phenyl)borate, tetrakis(monofluorophenyl)borate, tetrakis(difluorophenyl) borate, tetrakis(trifluorophenyl)borate, tetrakis(trifluorophenyl)borate, tetrakis(pentafluorophenyl)borate, tetrakis(tetrafluoromethylphenyl)borate, tetra(tolyl)borate, tetra(xylyl)borate, (triphenyl,pentafluorophenyl)borate, [tris(pentafluorophenyl),phenyl]borate, and tridecahydride-7,8-dicarbaundecaborate.

Of these noncoordinating anions, tetrakis(pentafluorophenyl)borate is preferable.

Examples of the cation, which is contained in the ionic compound, include a carbonium cation, an oxonium cation, an ammonium cation, a phosphonium cation, a cycloheptatrienyl cation, and a ferrocenium cation containing a transition metal.

Specific examples of the carbonium cation include triphenylcarbonium cation and trisubstituted carbonium cation such as tri(substituted phenyl)carbonium cation. Specific examples of the tri(substituted phenyl)carbonium cation include tri(methylphenyl)carbonium cation and tri(dimethylphenyl)carbonium cation.

Specific examples of the ammonium cation include: trialkylammonium cations such as trimethylammonium cation, triethylammonium cation, tripropylammonium cation, tributylammonium cation, and tri(n-butyl)ammonium cation; N,N-dialkylanilinium cations such as N,N-dimethylanilinium cation, N,N-diethylanilinium cation, and N,N-2,4,6-pentamethylanilinium cation; and dialkylammonium cations such as di(isopropyl)ammonium cation and dicyclohexylammonium cation.

Specific examples of the phosphonium cation include triarylphosphonium cations such as triphenylphosphonium cation, tri(methylphenyl)phosphonium cation, and tri(dimethylphenyl)phosphonium cation.

Of these cations, an anilinium cation or a carbonium cation is preferable, and triphenylcarbonium cation is more preferable.

Namely, the ionic compound contained in the catalyst composition of the present invention can be a combination of (i) a noncoordinating anion selected from the noncoordinating anions mentioned above and (ii) a cation selected from the cations mentioned above.

The ionic compound is preferably exemplified by triphenylcarboniumtetrakis(pentafluorophenyl)borate, triphenylcarboniumtetrakis(tetrafluorophenyl)borate, N,N-dimethylaniliniumtetrakis(pentafluorophenyl)borate, and 1,1'-dimethylferroceniumtetrakis(pentafluorophenyl)borate. The ionic compound may be used alone or in combination of two or more kinds.

Of these ionic compounds, triphenylcarboniumtetrakis(pentafluorophenyl)borate, for example is particularly preferable.

Alternatively, B(C₆F₅)₃, Al(C₆F₅)₃, or the like, which is Lewis acid capable of generating a cationic transition metal compound by reacting with a transition metal compound, may be used as the ionic compound, and such a Lewis acid may be used in combination of the ionic compounds mentioned above.

Further, an aluminum alkyl compound (aluminoxane, preferably MAO or MMAO) or a combination of an aluminum alkyl compound and a borate compound can be used as the ionic compound, and such a compound may be used in combination with another ionic compound. In particular, in a case where a monoanion ligand Q of the complex (general formula (I)) is other than alkyl or hydrido (for example, in a case where the monoanion ligand Q is halogen), it seems preferable to use an aluminum alkyl compound or a combination of an aluminum alkyl compound and a borate compound.

### (Another Optional Component Contained in the Catalyst Composition (A1))

The catalyst composition of the present invention can contain not only the metallocene complex and the ionic compound but also an optional component. The optional component is exemplified by an aluminum alkyl compound, a silane compound, and hydrogen.

The aluminum alkyl compound normally contains an organic aluminum compound referred to as aluminoxane (alumoxane) and used as a metallocene polymerization catalyst. For example, the aluminum alkyl compound is exemplified by methylaluminoxane (MAO).

The silane compound is exemplified by phenylsilane.

### (Composition Ratio etc. in the Catalyst Composition (A1))

As described earlier, the catalyst composition (A1) contains the metallocene complex and the ionic compound. In the catalyst composition (A1), a molar ratio of the ionic compound to the metallocene complex varies depending on kinds of the complex and the ionic compound.

For example, in a case where the ionic compound contains a carbonium cation and a boron anion (e.g., in a case where the ionic compound is [Ph₃C][B(C₆F₅)₄]), the molar ratio is preferably 0.5 to 1. In a case where the ionic compound contains, for example, MAO, the molar ratio is preferably approximately 300 to 4000. In a case where the molar ratio between the ionic compound and the complex falls within the above range, it is possible to sufficiently activate the metallocene complex and to more securely prevent an undesired reaction from occurring between the ionic compound and the monomer to be polymerized.

For example, it is possible to use the catalyst composition (A1) as a polymerization catalyst compound by 1) providing a composition containing components (including the metallocene complex and the ionic compound) to a polymerization reaction system or 2) separately providing the components to the polymerization reaction system so as to form a composition in the polymerization reaction system. In the above 1), "providing a composition containing components" encompasses providing the metallocene complex activated by a reaction with the ionic compound (activated species).

### <Catalyst Composition (B1)>

The catalyst composition (B1) contains 1) a metallocene complex and 2) an ionic compound containing a noncoordinating anion and a cation. The metallocene complex contains: a central metal M which is a group 3 metal atom or a lanthanoid metal atom; a ligand Cp* containing a substituted or unsubstituted cyclopentadienyl derivative bonded with the central metal M; monoanion ligands Q¹ and Q²; and a neutral Lewis base(s) L whose number is W (W is an integer of 0 to 3), and a structure of the metallocene complex is represented by the above general formula (I) (for general formula (I), refer to the above section

### <Catalyst Composition (A1)>). The metallocene complex is preferably a half metallocene complex.

### (Metallocene Complex Represented by General Formula (I))

The monoanion ligands Q¹ and Q², the neutral Lewis base(s) L whose number is W, and the central metal M of the structure represented by general formula (I) are identical in definition to those of the catalyst composition (A1). Therefore, the following description more specifically discusses the ligand Cp*.

The ligand Cp* in general formula (I) is any one selected from the group consisting of a substituted or unsubstituted cyclopentadienyl ring and an unsubstituted indenyl ring. From the viewpoint of (i) reducing a capability of selectively catalyzing a polymerization reaction of a styrene-type monomer per se and (ii) more selectively catalyzing a polymerization reaction of an isoprene per se or a polymerization reaction of a butadiene per se, the ligand Cp* is preferably an unsubstituted cyclopentadienyl ring or an unsubstituted indenyl ring, and more preferably an unsubstituted cyclopentadienyl ring.
In a case where Cp* is the substituted cyclopentadienyl ring, Cp* is represented by the following general formula (IV): 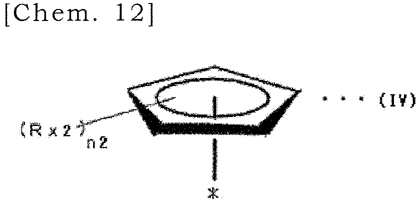 wherein Rx2 represents a C₁ to C₃ hydrocarbyl group bonded with a carbon atom in a skeleton of the cyclopentadienyl ring; * represents a bond with M; and n2 is an integer of 1 to 2.

The hydrocarbyl group is preferably a C₁ to C₃ alkyl group, and most preferably a methyl group.

The hydrocarbyl group may contain a substituent (referred to as a substituted hydrocarbyl group). A hydrocarbyl group of the substituted hydrocarbyl group is similar to the hydrocarbyl group mentioned above. A substituted hydrocarbyl group is a hydrocarbyl group obtained by substituting at least one hydrogen atom of a hydrocarbyl group by a halogen atom, an amide group, a phosphido group, an alkoxy group, an aryloxy group, or the like.

It is preferable that each Rx2 of the cyclopentadienyl ring be a methyl group. It is more preferable that Rx2 be a methyl group and n2 be 1.

The metallocene complex can be synthesized in accordance with a method described in, for example, (1) Reference J. Am. Chem. Soc, 2009, 131, 13870 or (2) Reference International Publication WO 2006/004068.

### (Ionic Compound Containing Noncoordinating Anion and Cation)

As described earlier, the catalyst composition (B1) contains an ionic compound. Note here that the ionic compound includes an ionic compound containing a noncoordinating anion and a cation. The ionic compound which is combined with the metallocene complex causes the metallocene complex to exhibit activity as a polymerization catalyst. A mechanism of this can be exemplified by a mechanism for generating a cationic complex (activated species) by causing the ionic compound to react with the metallocene complex. Note that an ionic compound identical to that described in the above section of the catalyst composition (A1) can be used as the ionic compound of the catalyst composition (B1). According to the present invention, since a polymerization reaction is carried out by adding the catalyst composition (A1) and the catalyst composition (B1) to an identical reaction system, in one aspect, it may be preferable to add one kind of ionic compound (an ionic compound shared by the catalyst compositions (A1) and (B1)).

### (Composition Ratio etc. in the Catalyst Composition (B1))

As described earlier, the catalyst composition (B1) contains the metallocene complex and the ionic compound. In the catalyst composition (B1), a molar ratio of the ionic compound to the metallocene complex varies depending on kinds of the complex and the ionic compound.

For example, in a case where the ionic compound contains a carbonium cation and a boron anion (e.g., in a case where the ionic compound is [Ph₃C][B(C₆F₅)₄]), the molar ratio is preferably 0.5 to 1. In a case where the ionic compound contains, for example, MAO, the molar ratio is preferably approximately 300 to 4000. In a case where the molar ratio between the ionic compound and the complex falls within the above range, it is possible to sufficiently activate the metallocene complex and to more securely prevent an undesired reaction from occurring between the ionic compound and the monomer to be polymerized.

For example, it is possible to use the catalyst composition (B1) as a polymerization catalyst compound by 1) providing a composition containing components (including the metallocene complex and the ionic compound) to a polymerization reaction system or 2) separately providing the components to the polymerization reaction system so as to form a composition in the polymerization reaction system. In the above 1), "providing a composition containing components" encompasses providing the metallocene complex activated by a reaction with the ionic compound (activated species).

### <First Monomer and Second Monomer>

The example (1) uses (i) a styrene-type monomer as the first monomer and (ii) an isoprene and/or a butadiene as the second monomer. The catalyst composition (A1) mainly catalyzes a syndiotactic polymerization reaction of the styrene-type monomer per se. The catalyst composition (B1) mainly catalyzes a cis-1,4 polymerization reaction of the isoprene and/or the butadiene.

Note that the styrene-type monomer, which refers to a substituted styrene containing a substituent on a benzene ring or an unsubstituted styrene, is particularly preferably an unsubstituted styrene (i.e., styrene). The substituted styrene is exemplified by, but not particularly limited to the following:
(1) alkylated styrenes such as p-methylstyrene, m-methylstyrene, o-methylstyrene, 2,4-dimethylstyrene, 2,5-dimethylstyrene, 3,4-dimethylstyrene, 3,5-dimethylstyrene, and p-tertiary butylstyrene;
(2) halogenated styrenes such as p-chlorostyrene, m-chlorostyrene, o-chlorostyrene, p-bromostyrene, m-bromostyrene, o-bromostyrene, p-fluorostyrene, m-fluorostyrene, o-fluorostyrene, and o-methyl-p-fluorostyrene;
(3) halogen-substituted alkylated styrenes such as p-chloromethylstyrene, m-chloromethylstyrene, and o-chloromethylstyrene;
(4) alkoxylated styrenes such as p-methoxystyrene, m-methoxystyrene, o-methoxystyrene, p-ethoxystyrene, methoxystyrene, and o-ethoxystyrene;
(5) carboxyalkylated styrenes such as p-carboxymethylstyrene, m-carboxymethylstyrene, and o-carboxymethylstyrene;
(6) alkylsilylated styrenes such as p-trimethylsilylstyrene; and
(7) compounds such as vinylnaphthalene in each of which substituents on a benzene ring which constitute a styrene are cyclized.

Note that the catalyst composition (B1) also makes it possible to carry out a positionally selective or stereoselective polymerization reaction of a conjugated diene as well as a butadiene. Note here that the conjugated diene is exemplified by, but not particularly limited to isoprene, 1,3-butadiene, 1,3-pentadiene, 1,4-pentadiene, 1,3-hexadiene, 1,4-hexadiene, 1,5-hexadiene, 2,4-dimethyl-1,3-pentadiene, 2-methyl-1,3-hexadiene, 2,4-hexadiene, and cyclhexadiene.

### <Chain Shuttling Agent>

The example (1) uses a chain shuttling agent. The chain shuttling agent refers to an agent which carries out a chain shuttling reaction in which a growth polymer chain is received and returned to a polymerization catalyst again. The chain shuttling agent is exemplified by, but not particularly limited to: trialkylaluminum-type chain shuttling agents such as triisobutylaluminum (TIBA), tripropylaluminum (TPA), and triethylaluminum (TEA); diethyl zinc; and the like. In particular, trialkylaluminum-type chain shuttling agents such as triisobutylaluminum (TIBA), tripropylaluminum (TPA), and triethylaluminum (TEA) are preferable.

In the example (1), use of the chain shuttling agent allows (i) a syndiotactic polystyrene polymer block obtained by polymerizing the first monomer (styrene-type monomer) per se and (ii) a cis-1,4 polyisoprene and/or polybutadiene polymer block obtained by polymerizing the second monomer (isoprene and/or butadiene) per se to be linked together, so that a positionally controlled or stereocontrolled block multidimensional copolymer is produced.

### <Polymerization Reaction>

The example (1) carries out a polymerization reaction in the presence of the catalyst composition (A1), the catalyst composition (B1), the styrene-type monomer, the isoprene and/or the butadiene, and the chain shuttling agent in an identical reaction system. For example, it is not particularly limited in what order and how these components are supplied to the reaction system.

A polymerization method can be any method such as a vapor phase polymerization method, a solution polymerization method, a suspension polymerization method, a liquid phase bulk polymerization method, an emulsion polymerization method, or a solid phase polymerization method. In the case of the solution polymerization method, a solvent to be used is inactive in the polymerization reaction, and is not particularly limited provided that the solvent allows a polymer material and a catalyst to be dissolved. The solvent is exemplified by saturated aliphatic hydrocarbons such as butane, pentane, hexane, and heptane; saturated alicyclic hydrocarbons such as cyclopentane and cyclohexane; aromatic hydrocarbons such as benzene and toluene; and halogenated hydrocarbons such as methylene chloride, chloroform, carbon tetrachloride, trichloroethylene, perchloroethylene, 1,2-dichloroethane, chlorbenzene, brombenzene, and chlortoluene.

Further, a solvent which is less toxic to a living organism is preferable. Specifically, an aromatic hydrocarbon, particularly toluene is preferable. As the solvent, one kind of solvent may be used alone, or a mixed solvent obtained by combining two or more kinds of solvents may also be used.

The solvent may be used in any amount. However, the solvent is preferably used in an amount which causes the metallocene complex contained in each of the catalyst compositions (A1) and (B1) to have a concentration of 0.1 mol/l to 0.0001 mol/l.

It is only necessary that the polymerization reaction be carried out at any temperature (polymerization temperature) that allows the polymerization reaction to progress. For example, the polymerization reaction can be carried out at a temperature falling within a range of -90 °C to 100 °C. The polymerization reaction can be carried out in a vicinity of a room temperature, i.e., a temperature of approximately 25 °C.

Polymerization time is, for example, approximately several seconds to several hours. the polymerization time may be, for example, not more than one hour, or not more than 30 minutes where appropriate.

An amount of the monomer to be used for the polymerization reaction can be appropriately set in accordance with a multidimensional polymer to be produced. For example, the styrene-type monomer is used at a molar ratio preferably of not less than 50 and not more than 2500 to 1, and more preferably of not less than 100 and not more than 1000 to 1, relatively to the metallocene complex of the catalyst composition (A1). Meanwhile, the isoprene and/or the butadiene is/are used at a molar ratio preferably of not less than 50 and not more than 2500 to 1, and more preferably of not less than 100 and not more than 1000 to 1, relatively to the metallocene complex of the catalyst composition (B1). In a case where (i) the styrene-type monomer and (ii) the isoprene and/or the butadiene are supplied at a molar ratio of not more than 2500 to 1 relatively to the respective metallocene complexes, activity and selectivity of a catalyst can be suitably maintained. Further, in a case where (i) the styrene-type monomer and (ii) the isoprene and/or the butadiene are supplied at a molar ratio of not less than 50 to 1 relatively to the respective metallocene complexes, a polymer having a molecular weight being not more than a given molecular weight can be obtained, so that the polymer thus obtained exhibits a sufficient property as a copolymer.

Note that an amount of the chain shuttling agent to be used for the polymerization reaction can be appropriately set in accordance with a multidimensional polymer to be produced. For example, the chain shuttling agent is used at a molar ratio of not less than 1 and not more than 1000 to 1, and preferably of not less than 2 and not more than 100 to 1, relatively to a total amount of all the catalyst compositions.

As a result of the polymerization reaction, a multidimensional polymer is obtained which contains (i) a syndiotactic polystyrene block and (ii) a polyisoprene block and/or a polybutadiene block which are/is provided with given positional regularity or stereoregularity (cis-1,4).

### <Multidimensional Polymer to Be Obtained>

As described earlier, the multidimensional copolymer obtained in the example (1) contains (i) a syndiotactic polystyrene block and (ii) a polyisoprene block and/or a polybutadiene block which are/is provided with given positional regularity or stereoregularity.

Syndiotacticity exhibited by the polystyrene block is, for example, not less than 80 rrrr% (for example, preferably 85 rrrr%, more preferably 90 rrrr%, particularly preferably 95 rrrr%, and most preferably 99 rrrr%) in terms of a pentad indication. These examples of syndiotacticity can be found based on data which is obtained by measuring NMR (especially ¹³C-NMR) of a block multidimensional polymer of the present invention.

A cis-1,4 structure accounts for, for example, not less than 60%, preferably not less than 70%, and more preferably not less than 80% of the polyisoprene block and/or the polybutadiene block. Note that a ratio of the cis-1,4 structure to the polyisoprene block and/or the polybutadiene block is herein expressed as % assuming that the number of all polyisoprene and/or polybutadiene-derived repeating units in the block multidimensional polymer of the present invention is a denominator and the number of repeating units having the cis-1,4 structure is a numerator.

A number average molecular weight of the multidimensional polymer of the present invention is not particularly limited. For example, the number average molecular weight falls within a range of, for example, not less than 1 and not more than 10, preferably of not less than 1.1 and not more than 8, and more preferably of not less than 1.2 and not more than 5.

### [3. Example (2) of the Multidimensional Polymer Production Method of the Present Invention]

### <Outline of the Multidimensional Polymer Production Method>

This example (2) uses (i) a styrene-type monomer as the first monomer and (ii) an isoprene and/or a butadiene as the second monomer. Further, the example (2) uses the catalyst composition (A1) (described earlier) as the first catalyst which catalyzes a positionally selective or stereoselective polymerization reaction of the styrene-type monomer per se. In addition, the example (2) uses a catalyst composition (B2) (described later) as the second catalyst which catalyzes a positionally selective or stereoselective polymerization reaction of the isoprene per se and/or the butadiene per se.

The catalyst composition (B2) is extremely low in selectivity (catalytic effect) to the polymerization reaction of (a) each of the isoprene and the butadiene and (b) the styrene-type monomer, and selectivity (catalytic effect) to a polymerization reaction of the styrene-type monomer per se while catalyzing the polymerization reaction of the isoprene per se or the polymerization reaction of the butadiene per se (namely, there is a clear difference in polymerization activity).

Then, the example (2) carries out a polymerization reaction in the presence of the catalyst composition (A1), the catalyst composition (B2), the styrene-type monomer, the isoprene and/or the butadiene, and the chain shuttling agent in an identical reaction system. As a result of the polymerization reaction, a multidimensional polymer is obtained which contains (i) a syndiotactic polystyrene block and (ii) a polyisoprene block and/or a polybutadiene block which are/is provided with given positional regularity or stereoregularity.

Note that in the example (2), it is possible to use the catalyst composition (A1), the styrene-type monomer (first monomer), the isoprene and/or the butadiene (second monomer), and the chain shuttling agent, which are identical to those described in the above section [2. Example (1) of the Multidimensional Polymer Production Method of the Present Invention]. Accordingly, the following description mainly discusses the catalyst composition (B2).

### <Catalyst Composition (B2)>

The catalyst composition (B2) contains 1) a metallocene complex and 2) an ionic compound containing a noncoordinating anion and a cation. The metallocene complex contains: a central metal M which is a group 3 metal atom or a lanthanoid metal atom; and a ligand Cp* containing a substituted or unsubstituted cyclopentadienyl derivative bonded with the central metal M, and a structure of the metallocene complex is represented by the following general formula (VI). The metallocene complex is preferably a half metallocene complex.

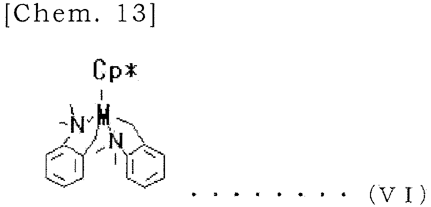

### (Metallocene Complex Represented by General Formula (VI))

In the structure represented by general formula (VI), the central metal M and the ligand Cp* are identical in definition to those of the metallocene complex of the catalyst composition (B1). Therefore, the description of the catalyst composition (B1) can be referred to. Note that the structure represented by general formula (VI) can be regarded as the structure representing the metallocene complex of the catalyst composition (B1) and represented by general formula (I) wherein Q¹ and Q² are each CH₂C₆H₄N(CH₃)₂-o and W is 0 (zero).

As described in the above section of the metallocene complex of the catalyst composition (B1), from the viewpoint of (i) reducing a capability of selectively catalyzing a polymerization reaction of a styrene-type monomer per se and (ii) more selectively catalyzing a polymerization reaction of an isoprene per se or a polymerization reaction of a butadiene per se, the ligand Cp* is preferably an unsubstituted cyclopentadienyl ring or an unsubstituted indenyl ring, and more preferably an unsubstituted cyclopentadienyl ring.

The metallocene complex represented by general formula (VI) can be synthesized with reference to a method described in, for example, (1) Reference: International Publication WO 2006/004068 or (2) Reference: Japanese Patent Application Publication, Tokukai, No. 2008-222780 A.

### (Ionic Compound Containing Noncoordinating Anion and Cation)

As described earlier, the catalyst composition (B2) contains an ionic compound. Note here that the ionic compound includes an ionic compound containing a noncoordinating anion and a cation. The ionic compound which is combined with the metallocene complex causes the metallocene complex to exhibit activity as a polymerization catalyst. A mechanism of this can be exemplified by a mechanism for generating a cationic complex (activated species) by causing the ionic compound to react with the metallocene complex. Note that an ionic compound identical to that described in the above section of the catalyst composition (A1) can be used as the ionic compound of the catalyst composition (B2). According to the present invention, since a polymerization reaction is carried out by adding the catalyst composition (A1) and the catalyst composition (B2) to an identical reaction system, in one aspect, it may be preferable to add one kind of ionic compound (an ionic compound shared by the catalyst compositions (A1) and (B2)).

### (Composition Ratio etc. in the Catalyst Composition (B2))

As described earlier, the catalyst composition (B2) contains the metallocene complex and the ionic compound. In the catalyst composition (B2), a molar ratio of the ionic compound to the metallocene complex varies depending on kinds of the complex and the ionic compound.

For example, in a case where the ionic compound contains a carbonium cation and a boron anion (e.g., in a case where the ionic compound is [Ph₃C][B(C₆F₅)₄]), the molar ratio is preferably 0.5 to 1. In a case where the ionic compound contains, for example, MAO, the molar ratio is preferably approximately 300 to 4000. In a case where the molar ratio between the ionic compound and the complex falls within the above range, it is possible to sufficiently activate the metallocene complex and to more securely prevent an undesired reaction from occurring between the ionic compound and the monomer to be polymerized.

For example, it is possible to use the catalyst composition (B2) as a polymerization catalyst compound by 1) providing a composition containing components (including the metallocene complex and the ionic compound) to a polymerization reaction system or 2) separately providing the components to the polymerization reaction system so as to form a composition in the polymerization reaction system. In the above 1), "providing a composition containing components" encompasses providing the metallocene complex activated by a reaction with the ionic compound (activated species).

### <Polymerization Reaction>

The example (2) carries out a polymerization reaction in the presence of the catalyst composition (A1), the catalyst composition (B2), the styrene-type monomer, the isoprene and/or the butadiene, and the chain shuttling agent in an identical reaction system. For example, it is not particularly limited in what order and how these components are supplied to the reaction system.

Note that in the example (2), conditions identical to those described in the above section [2. Example (1) of the Multidimensional Polymer Production Method of the Present Invention] are applicable to a polymerization method, a kind and an amount of a solvent to be used in the case of the solution polymerization method, a temperature at which the polymerization reaction is carried out (polymerization temperature), polymerization time, an amount of the monomer to be used for the polymerization reaction, and an amount of the chain shuttling agent to be used for the polymerization reaction.

As a result of the polymerization reaction, a multidimensional polymer is obtained which contains (i) a syndiotactic polystyrene block and (ii) a polyisoprene block and/or a polybutadiene block which are/is provided with given positional regularity or stereoregularity (cis-1,4).

### <Multidimensional Polymer to Be Obtained>

As described earlier, the multidimensional copolymer obtained in the example (2) contains (i) a syndiotactic polystyrene block and (ii) a polyisoprene block and/or a polybutadiene block which are/is provided with given positional regularity or stereoregularity.

Syndiotacticity exhibited by the polystyrene block is, for example, not less than 80 rrrr% (for example, preferably 85 rrrr%, more preferably 90 rrrr%, particularly preferably 95 rrrr%, and most preferably 99 rrrr%) in terms of a pentad indication. These examples of syndiotacticity can be found based on data which is obtained by measuring NMR (especially ¹³C-NMR) of a block multidimensional polymer of the present invention.

A cis-1,4 structure accounts for, for example, not less than 60%, preferably not less than 70%, and more preferably not less than 80% of the polyisoprene block and/or the polybutadiene block. Note that a ratio of the cis-1,4 structure to the polyisoprene block and/or the polybutadiene block is herein expressed as % assuming that the number of all polyisoprene and/or polybutadiene-derived repeating units in the block multidimensional polymer of the present invention is a denominator and the number of repeating units having the cis-1,4 structure is a numerator.

A number average molecular weight of the multidimensional polymer of the present invention is not particularly limited. For example, the number average molecular weight falls within a range of, for example, not less than 1 and not more than 10, preferably of not less than 1.1 and not more than 8, and more preferably of not less than 1.2 and not more than 5.

### [4. Example (3) of the Multidimensional Polymer Production Method of the Present Invention]

### <Outline of the Multidimensional Polymer Production Method>

This example (3) uses (i) a styrene-type monomer as the first monomer and (ii) an isoprene and/or a butadiene as the second monomer. Further, the example (3) uses the catalyst composition (A1) (described earlier) as the first catalyst which catalyzes a positionally selective or stereoselective polymerization reaction of the styrene-type monomer per se. In addition, the example (3) uses a catalyst composition (B3) (described later) as the second catalyst which catalyzes a positionally selective or stereoselective polymerization reaction of the isoprene per se and/or the butadiene per se.

The catalyst composition (B3) is extremely low in selectivity (catalytic effect) to the polymerization reaction of (a) each of the isoprene and the butadiene and (b) the styrene-type monomer, and selectivity (catalytic effect) to a polymerization reaction of the styrene-type monomer per se while catalyzing the polymerization reaction of the isoprene per se or the polymerization reaction of the butadiene per se (namely, there is a clear difference in polymerization activity).

Then, the example (3) carries out a polymerization reaction in the presence of the catalyst composition (A1), the catalyst composition (B3), the styrene-type monomer, the isoprene and/or the butadiene, and the chain shuttling agent in an identical reaction system. As a result of the polymerization reaction, a multidimensional polymer is obtained which contains (i) a syndiotactic polystyrene block and (ii) a polyisoprene block and/or a polybutadiene block which are/is provided with given positional regularity or stereoregularity.

Note that in the example (3), it is possible to use the catalyst composition (A1), the styrene-type monomer (first monomer), the isoprene and/or the butadiene (second monomer), and the chain shuttling agent, which are identical to those described in the above section [2. Example (1) of the Multidimensional Polymer Production Method of the Present Invention]. Accordingly, the following description mainly discusses the catalyst composition (B3).

### <Catalyst Composition (B3)>

The catalyst composition (B3) contains 1) a complex represented by general formula (V) and 2) an ionic compound containing a noncoordinating anion and a cation. The complex contains: a central metal M which is scandium (Sc), yttrium (Y), or any one of rare earth elements from lanthanum (La) to lutetium (Lu) except promethium Pm; monoanion ligands Q¹ and Q²; and a neutral Lewis base(s) L whose number is W (W is an integer of 0 to 3).

### (Complex Represented by General Formula (V))

The monoanion ligands Q¹ and Q², and the neutral Lewis base(s) L whose number is W of the structure represented by general formula (V) are identical in definition to those of the catalyst composition (A1). Therefore, the following description more specifically discusses R1 to R3 and the central metal M. 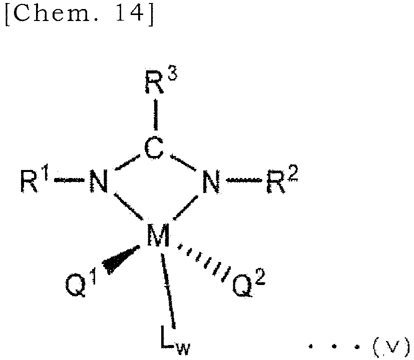 wherein M is a central metal of the complex. The central metal M is scandium (Sc), yttrium (Y), or any one of rare earth elements from lanthanum (La) to lutetium (Lu) except promethium Pm. The complex can be used in the present invention as a component of the polymerization catalyst composition (B3). Therefore, the central metal M is appropriately selected in accordance with a kind of monomer to be polymerized. In particular, the central metal M is preferably scandium Sc, yttrium Y, or lutetium Lu, and particularly preferably scandium Sc or yttrium Y.

In general formula (V), R¹ and R² independently represent an alkyl group; or a cyclohexyl group, an aryl group, or an aralkyl group which is substituted or unsubstituted. The alkyl group can be exemplified by a methyl group, an ethyl group, an isopropyl group, an n-butyl group, and a t-butyl group. The substituted cyclohexyl group can be exemplified by a cyclohexyl group such as a methylcyclohexyl group having an alkyl group substituent. The unsubstituted aryl group can be exemplified by a phenyl group. The substituted aryl group can be exemplified by a phenyl group having an alkyl group substituent. The unsubstituted aralkyl group can be exemplified by a benzyl group. The substituted aralkyl group can be exemplified by a benzyl group having an alkyl group substituent. Of these groups, phenyl having an alkyl group substituent is preferable, and a 2,6-diisopropylphenyl group is particularly preferable. R¹ and R² may be identical or different. However, each of R¹ and R² is preferably a phenyl group having an alkyl group substituent, and more preferably a 2,6-diisopropylphenyl group.

In general formula (V), R³ represents an alkyl group; an alkenyl group; an alkynyl group; an aryl group or an aralkyl group; an aliphatic, aromatic, or cyclic amino group; a phosphino group; a boryl group; an alkylthio or arylthio group; or an alkoxy or aryloxy group. Of these groups, an aryl group is preferable, and a phenyl group is particularly preferable.

Further, the complex represented by general formula (V) preferably has a structure in which each of R¹ and R² is a 2,6-diisopropylphenyl group and R³ is N,N'-bis(2,6-diisopropylphenyl)benzamidinate (NCN), which is a phenyl group.

The complex represented by general formula (V) can be synthesized with reference to a method described in, for example, (1) Reference: Japanese Patent Application Publication, Tokukai, No. 2007-238857 A or (2) Reference: Japanese Patent Application Publication, Tokukai, No. 2008-222791 A.

### (Ionic Compound Containing Noncoordinating Anion and Cation)

As described earlier, the catalyst composition (B3) contains an ionic compound. Note here that the ionic compound includes an ionic compound containing a noncoordinating anion and a cation. The ionic compound which is combined with the complex causes the complex to exhibit activity as a polymerization catalyst. A mechanism of this can be exemplified by a mechanism for generating a cationic complex (activated species) by causing the ionic compound to react with the complex. Note that an ionic compound identical to that described in the above section of the catalyst composition (A1) can be used as the ionic compound of the catalyst composition (B3). According to the present invention, since a polymerization reaction is carried out by adding the catalyst composition (A1) and the catalyst composition (B3) to an identical reaction system, in one aspect, it may be preferable to add one kind of ionic compound (an ionic compound shared by the catalyst compositions (A1) and (B3)).

### (Composition Ratio etc. in the Catalyst Composition (B3))

As described earlier, the catalyst composition (B3) contains the complex and the ionic compound. In the catalyst composition (B3), a molar ratio of the ionic compound to the complex varies depending on kinds of the complex and the ionic compound.

For example, in a case where the ionic compound contains a carbonium cation and a boron anion (e.g., in a case where the ionic compound is [Ph₃C][B(C₆F₅)₄]), the molar ratio is preferably 0.5 to 1. In a case where the ionic compound contains, for example, MAO, the molar ratio is preferably approximately 300 to 4000. In a case where the molar ratio between the ionic compound and the complex falls within the above range, it is possible to sufficiently activate the complex and to more securely prevent an undesired reaction from occurring between the ionic compound and the monomer to be polymerized.

For example, it is possible to use the catalyst composition (B3) as a polymerization catalyst compound by 1) providing a composition containing components (including the complex and the ionic compound) to a polymerization reaction system or 2) separately providing the components to the polymerization reaction system so as to form a composition in the polymerization reaction system. In the above 1), "providing a composition containing components" encompasses providing the complex activated by a reaction with the ionic compound (activated species).

### <Polymerization Reaction>

The example (3) carries out a polymerization reaction in the presence of the catalyst composition (A1), the catalyst composition (B3), the styrene-type monomer, the isoprene and/or the butadiene, and the chain shuttling agent in an identical reaction system. For example, it is not particularly limited in what order and how these components are supplied to the reaction system.

Note that in the example (3), conditions identical to those described in the above section [2. Example (1) of the Multidimensional Polymer Production Method of the Present Invention] are applicable to a polymerization method, a kind and an amount of a solvent to be used in the case of the solution polymerization method, a temperature at which the polymerization reaction is carried out (polymerization temperature), polymerization time, an amount of the monomer to be used for the polymerization reaction, and an amount of the chain shuttling agent to be used for the polymerization reaction.

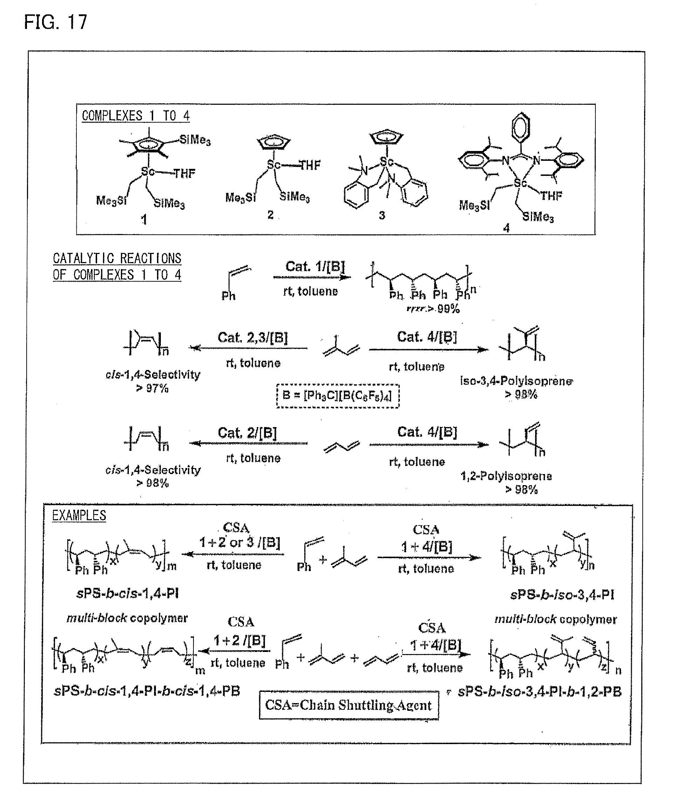

As a result of the polymerization reaction, a multidimensional polymer is obtained which contains (i) a syndiotactic polystyrene block and (ii) a polyisoprene block and/or a polybutadiene block which are/is provided with given positional regularity or stereoregularity. Note here that the polyisoprene block exhibits positional regularity or stereoregularity of iso-3,4 and the polybutadiene block exhibits positional regularity or stereoregularity of a 1,2-repeating unit derived from butadiene (see also Fig. 17).

### <Multidimensional Polymer to Be Obtained>

As described earlier, the multidimensional polymer obtained in the example (3) contains (i) a syndiotactic polystyrene block and (ii) a polyisoprene block and/or a polybutadiene block which are/is provided with given positional regularity or stereoregularity.

Syndiotacticity exhibited by the polystyrene block is, for example, not less than 80 rrrr% (for example, preferably 85 rrrr%, more preferably 90 rrrr%, particularly preferably 95 rrrr%, and most preferably 99 rrrr%) in terms of a pentad indication. These examples of syndiotacticity can be found based on data which is obtained by measuring NMR (especially ¹³C-NMR) of a block multidimensional polymer of the present invention.

A iso-3,4 structure accounts for, for example, not less than 60%, preferably not less than 70%, and more preferably not less than 80% of the polyisoprene block. Note that a ratio of the iso-3,4 structure to the polyisoprene block is herein expressed as % assuming that the number of all polyisoprene-derived repeating units in the block multidimensional polymer of the present invention is a denominator and the number of repeating units having the iso-3,4 structure is a numerator.

A 1,2-repeating unit derived from butadiene accounts for, for example, not less than 60%, preferably not less than 70%, and more preferably not less than 80% of the polybutadiene block. Note that a ratio of the 1,2-repeating unit derived from butadiene to the polybutadiene block is herein expressed as % assuming that the number of all polybutadiene-derived repeating units in the block multidimensional polymer of the present invention is a denominator and the number of repeating units having a structure of the 1,2-repeating unit derived from butadiene is a numerator.

A number average molecular weight of the multidimensional polymer of the present invention is not particularly limited. For example, the number average molecular weight falls within a range of, for example, not less than 1 and not more than 10, preferably of not less than 1.1 and not more than 8, and more preferably of not less than 1.2 and not more than 5.

### [5. Example (4) of the Multidimensional Polymer Production Method of the Present Invention]

This example (4) uses (i) a styrene-type monomer as the first monomer and (ii) an isoprene and/or a butadiene as the second monomer.

Further, in the example (4), the catalyst composition (A1) (described earlier) or an ansa-metallocene neodymium catalyst (ansa-neodymocene catalyst) is used as the first catalyst which catalyzes a positionally selective or stereoselective polymerization reaction of the styrene-type monomer per se. The ansa-metallocene neodymium catalyst is exemplified by an ansa-metallocene neodymium catalyst described in, for example, Reference J. Am. Chem. Soc., 2004, 126 (39), 12240. This allows formation of a syndiotactic polystyrene block.

In addition, the example (4) uses, as the second catalyst which catalyzes a positionally selective or stereoselective polymerization reaction of the isoprene per se and/or the butadiene per se, various metallocene catalysts which are known to catalyze the positionally selective or stereoselective polymerization reaction. The various metallocene catalysts are exemplified by metallocene catalysts which are described in, for example, Reference: Japanese Patent Application Publication, Tokukai, No. 2004-238637 A, Reference: Japanese Patent Application Publication, Tokukai, No. 2004-27179 A, Reference: Japanese Patent Application Publication, Tokukai, No. 2004-27103 A, Reference: Japanese Patent Application Publication, Tokukai, No. 2003-292513 A, Reference: Japanese Patent Application Publication, Tokukai, No. 2002-256012 A, Reference: Japanese Patent Application Publication, Tokukai, No. 2002-187908 A, Reference: Japanese Patent Application Publication, Tokukai, No. 2002-69117 A, Reference: Japanese Patent Application Publication, Tokukai, No. 2001-288234 A, Reference: Japanese Patent Application Publication, Tokukai, No. 2001-64313 A, and Reference: Japanese Patent Application Publication, Tokukai, No. 2000-313710 A. The metallocene catalysts described in these references each catalize a polymerization reaction so that the isoprene and the butadiene are introduced into a polymer as repeating units having the cis-1,4 structure.

Then, the example (4) carries out a polymerization reaction in the presence of the first catalyst, the second catalyst, the first monomer, the second monomer, and the chain shuttling agent in an identical reaction system. As a result of the polymerization reaction, a multidimensional polymer is obtained which contains (i) a syndiotactic polystyrene block and (ii) a polyisoprene block and/or a polybutadiene block which are/is provided with given positional regularity or stereoregularity.

The present invention is not limited to the description of the embodiments above, but may be altered by a skilled person within the scope of the claims. An embodiment based on a proper combination of technical means disclosed in different embodiments is encompassed in the technical scope of the present invention.

### Examples

The following description more specifically discusses the present invention with reference to Examples.

### [Part A1-1: Synthesis of Syndiotactic Polystyrene-block-cis-1,4-polyisoprene Block Copolymer]

As shown in the following Examples 1 through 9, Part A1-1 synthesized a syndiotactic polystyrene-block-cis-1,4-polyisoprene block copolymer by use of cationic scandiumdialkyl complexes (1) and (2) in the presence of TIBA or TPA. Results of the synthesis, reaction conditions, etc. are shown together in Table 1.

### <Example 1>

A typical polymerization reaction is described below (Table 1, run 1). A toluene solution (4 ml) of [Ph₃C][B(C₆F₅)₄] (36 mg, 40 µmol) was mixed with a toluene solution (8 ml) of (η⁵-C₅Me₄SiMe₃)Sc(CH₂SiMe₃)₂(THF) (a complex (1): 9.4 mg, 20 µmol) and (η⁵-C₅H₅)Sc(CH₂SiMe₃)₂(THF) (a complex (2): 7.1 mg, 20 µmol) in a 100 mL flask in a glove box at 25 °C. A resulting mixture was stirred at a room temperature for 2 minutes, and a monomer mixture containing 1.04 g (10 mmol) styrene and 0.68 g (10 mmol) isoprene in 28 mL toluene was added to the flask. After a copolymerization reaction was carried out for 4 hours, the flask was taken out from the glove box, and 10 mL methanol was added to the flask so as to terminate the polymerization reaction. A resulting mixture was poured over methanol (400 mL) so as to precipitate a polymer product. A polymer was filtered out and vacuum-dried at 60 °C until the polymer had a given weight.

### <Example 2>

A typical polymerization reaction is described below (Table 1, run 2). A toluene solution (4 ml) of [Ph₃C][B(C₆F₅)₄] (36 mg, 40 µmol) was mixed with a toluene solution (8 ml) of (η⁵-C₅Me₄SiMe₃)Sc(CH₂SiMe₃)₂(THF) (a complex (1): 9.4 mg, 20 µmol) and (η⁵-C₅H₅)Sc(CH₂SiMe₃)₂(THF) (a complex (2): 7.1 mg, 20 µmol) in a 100 mL flask in a glove box at 25 °C. Then, 200 µL TIBA (1 mol/L in hexane, Al/Sc = 5) was added to a reaction mixture, and a resulting mixture reacted for 2 minutes. Further, a monomer mixture containing 1.04 g (10 mmol) styrene and 0.68 g (10 mmol) isoprene in 28 mL toluene was added. After a copolymerization reaction was carried out for 2 hours, the flask was taken out from the glove box, and 10 mL methanol was added to the flask so as to terminate the polymerization reaction. A resulting mixture was poured over methanol (400 mL) so as to precipitate a polymer product. A polymer was filtered out and vacuum-dried at 60 °C until the polymer had a given weight. An obtained copolymer was extracted at a room temperature by using THF as a solvent, and no homo-PI was detected.

### <Example 3>

A procedure and conditions for copolymerization of Example 3 (table 1, run 3) are similar to those of Example 2 except that Example 3 increased an amount of TIBA to 400 µL (Al/Sc = 10).

### <Example 4>

A procedure and conditions for copolymerization of Example 4 (table 1, run 4) are similar to those of Example 2 except that Example 4 increased an amount of TIBA to 800 µL (Al/Sc = 20).

### <Example 5>

A procedure and conditions for copolymerization of Example 5 (table 1, run 5) are similar to those of Example 2 except that Example 5 used a monomer mixture containing 0.52 g (5 mmol) styrene and 1.36 g (20 mmol) isoprene.

### <Example 6>

A procedure and conditions for copolymerization of Example 6 (table 1, run 6) are similar to those of Example 2 except that Example 6 used a monomer mixture containing 0.52 g (5 mmol) styrene and 2.04 g (30 mmol) isoprene.

### <Example 7>

A procedure and conditions for copolymerization of Example 7 (table 1, run 7) are similar to those of Example 3 except that Example 7 used a monomer mixture containing 1.04 g (10 mmol) styrene and 1.36 g (20 mmol) isoprene.

### <Example 8>

A procedure and conditions for copolymerization of Example 8 (table 1, run 8) are similar to those of Example 2 except that Example 8 used 80 µL tripropyl-aluminum (TPA, 80 µmol, 1 mol/L in hexane, Al/Sc = 2)) instead of TIBA.

### <Example 9>

A procedure and conditions for copolymerization of Example 9 (table 1, run 9) are similar to those of Example 8 except that Example 9 increased an amount of TPA to 200 µL (Al/Sc = 5).
[Table 1]

**Table 1. Block copolymerization of styrene with isoprene in the presence of chain shuttling agent. ^{a}**

| Ru n | Cat. | CSA/Cat | Monomer ^{b} Ip/St | Yield [g] | Conv. [%] | *s*PS/1,4-IP/3,4-IP^{c} [mol%] | *M*ₙ^{d} [*10⁻³] | *M*_{w}/*M*ₙ ^{d} | *T*ₘ(*T*_{g})^{e} [°C] |
|---|---|---|---|---|---|---|---|---|---|
| | | TIBA | | | | | | | |
| 1 | 1+2 | - | 250/250 | 0.48 | 28 | (aPS)13/56/31 | 13.1 | 2.82 | (-29) |
| 2 | 1+2 | 5 | 250/250 | 1.72 | 100 | 49/49/2 | 109.4 | 1.43 | 271(-59) |
| 3 | 1+2 | 10 | 250/250 | 1.72 | 100 | 48/52/1 | 99.7 | 1.76 | 270(-59) |
| 4 | 1+2 | 20 | 250/250 | 1.72 | 100 | 50/49/1 | 74.0 | 1.89 | 268(-60) |
| 5 | 1+2 | 5 | 500/125 | 1.88 | 100 | 30/66/3 | 99.3 | 1.88 | 270(-57) |
| 6 | 1+2 | 5 | 750/125 | 2.60 | 100 | 21/73/6 | 141.7 | 1.90 | 270(-57) |
| 7 | 1+2 | 10 | 500/250 | 2.40 | 100 | 34/64/2 | 89.6 | 2.39 | 268(-59) |
| | | TPA/Cat | | | | | | | |
| 8 | 1+2 | 2 | 250/250 | 1.72 | 100 | 51/48/1 | 77.7 | 1.67 | 271(-59) |
| 9 | 1+2 | 5 | 250/250 | 1.72 | 100 | 51/48/1 | 19.6 | 2.41 | 270(-58) |

| | | | | | | | | | |
|---|---|---|---|---|---|---|---|---|---|
| ^{a} Conditions: Sc (40 µmol), activator (40 µmol), toluene = 40ml, T = 25°C; ^{b}Molar ratio to [Sc]; ^{c} Molar ratio from the ¹H NMR and ¹³C NMR; ^{d} *Mₙ* and *M_{w}*/*Mₙ* were determined by GPC using polystyrene standards. ^{e} Measured by differential scanning calorimeter (DSC). | | | | | | | | | |

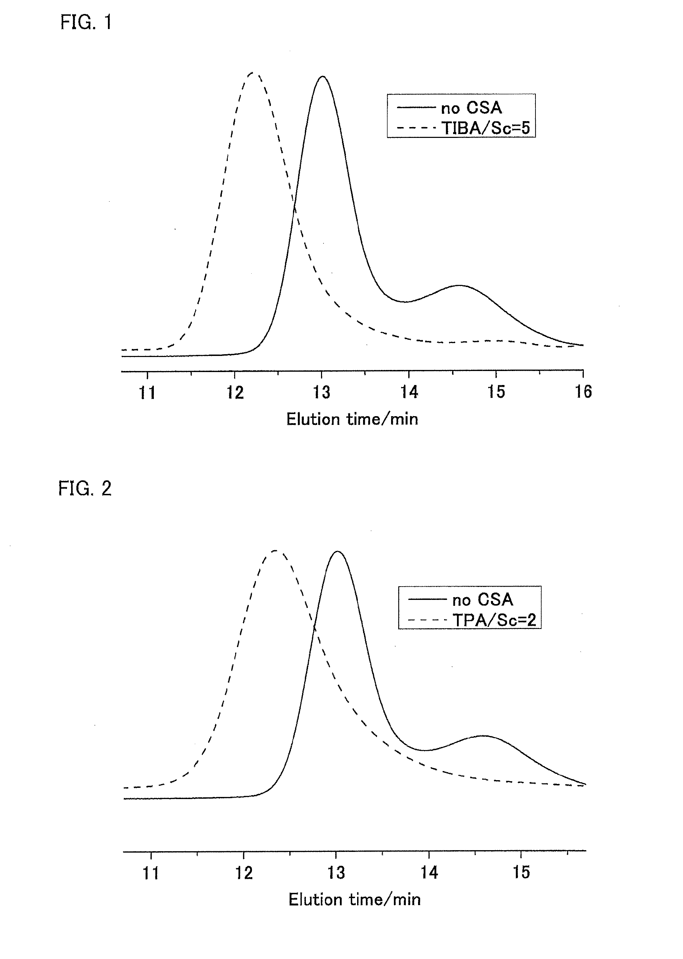

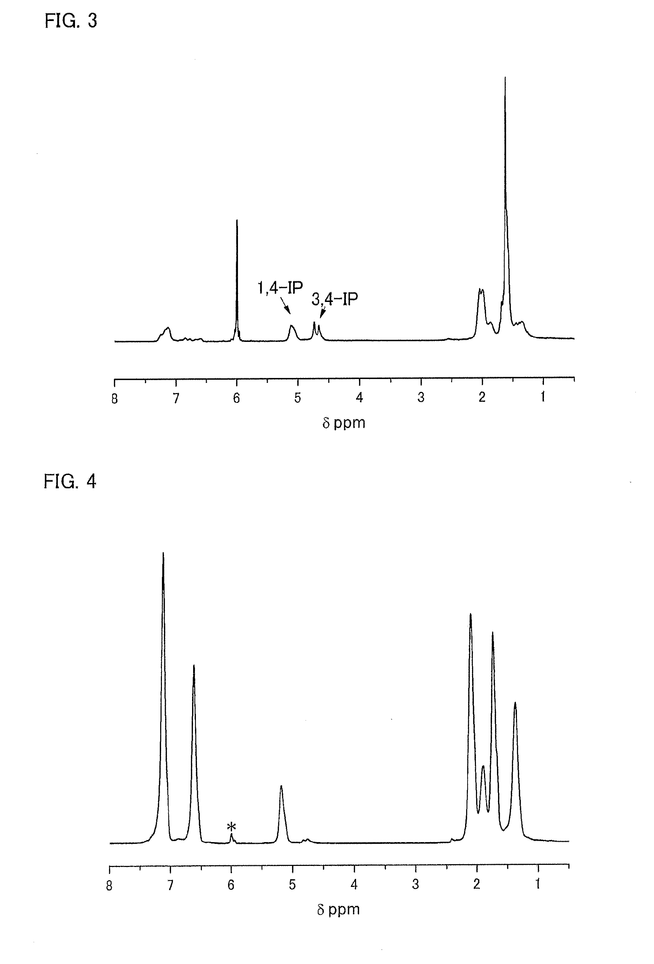

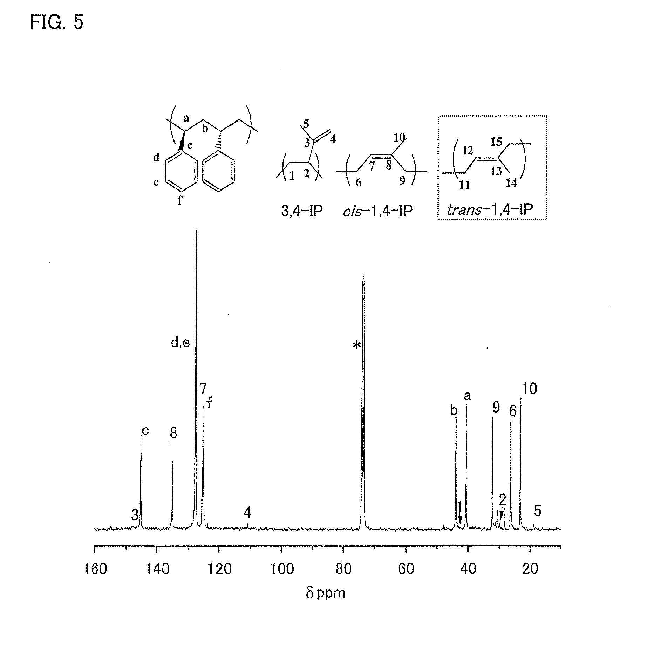

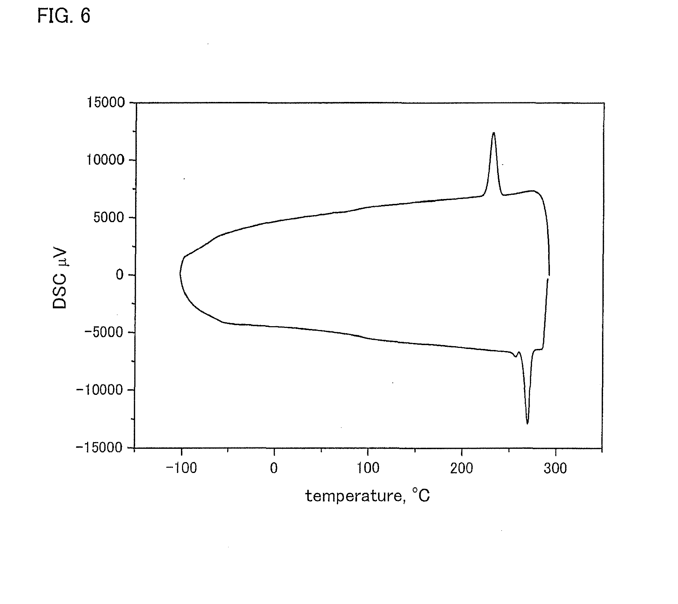

Fig. 1 illustrates GPC graphs of run 1 (with no chain shuttling agent: no CSA) and run 2 (TIBA/Sc=5) each shown in Table 1. Fig. 2 illustrates GPC graphs of run 1 (with no chain shuttling agent: no CSA) and run 8 (TPA/Sc=2) each shown in Table 1. Fig. 3 illustrates a ¹H NMR spectrum of run 1 (with no chain shuttling agent) shown in Table 1. Fig. 4 illustrates a ¹H NMR spectrum of run 2 (TIBA/Sc=5) shown in Table 1. Fig. 5 illustrates a ¹³C NMR spectrum of run 2 (TIBA/Sc=5) shown in Table 1. Fig. 6 illustrates a DSC curve of a block copolymer (run 3 shown in Table 1).

### [Part A1-2: Synthesis of Syndiotactic Polystyrene-block-cis-1,4-polyisoprene Block Copolymer]

As shown in the following Examples 1 through 5, Part A1-2 synthesized a syndiotactic polystyrene-block-1,4-polyisoprene block copolymer by use of a cationic scandiumdialkyl complex (1) and a scandium aminobenzyl complex (3) in the presence of TIBA or TPA. Results of the synthesis, reaction conditions, etc. are shown together in Table 2.

### <Synthesis Example: Synthesis of the Scandium Aminobenzyl Complex (3)>

A THF solution (12 mL) of Sc(CH₂C₆H₄NMe₂-o)₃ (1.792 g, 4.000 mmol) was added to a THF solution (6 mL) of C₅H₆ (0.317 g, 4.800 mmol) in a Schlenk tube with a Teflon (Registered Trademark) cock in a glove box. The Schlenk tube was taken out from the glove box and heated at 40 °C for 1 hour. A solvent was removed under a reduced pressure. An obtained residue was hexane-extracted. Yellow crystals (1.226 g, 81% yield) of the complex (3) (CpSc(CH₂C6H4Me2-o)₂) was obtained from a concentrated hexane solution at-30 °C.
¹H NMR (C₆D₆, 50 °C): 1.47 (s, 4H, CH₂), 2.32 (s, 12H, NMe₂), 5.79 (s, 5H, C₅H₅), 6.73 (2H, aryl), 6.82 (2H, aryl), 7.05 (4H, aryl). ¹³C NMR (C₆D₆, 25 °C): 44.5 (CH₂), 46.6 (NMe₂), 112.2, 117.2, 120.9, 127.2, 130.1, 144.0, 145.71 (aromatics and Cp ring carbons). Anal. Calcd. for C₂₃H₂₉ScN₂: C 72.99; H 7.72; N 7.40. Found: C 73.44; H 7.75; N 7.45.

### <Example 1>

A typical polymerization reaction is described below (Table 2, run 1). A toluene solution (4 ml) of [Ph₃C][B(C₆F₅)₄] (36 mg, 40 µmol) was mixed with a toluene solution (8 ml) of (η⁵-C₅Me₄SiMe₃)Sc(CH₂SiMe₃)₂(THF) (a complex (1): 9.4 mg, 20 µmol) and CpSc(CH₂C6H4Me2-o)₂ (a complex (3): 7.6 mg, 20 µmol) in a 100 mL flask in a glove box at 25 °C. A resulting mixture was stirred at a room temperature for 2 minutes, and a monomer mixture containing 1.04 g (10 mmol) styrene and 0.68 g (10 mmol) isoprene in 28 mL toluene was added to the flask. After a copolymerization reaction was carried out for 4 hours, the flask was taken out from the glove box, and 10 mL methanol was added to the flask so as to terminate the polymerization reaction. A resulting mixture was poured over methanol (400 mL) so as to precipitate a polymer product. A polymer was filtered out and vacuum-dried at 60 °C until the polymer had a given weight.

### <Example 2>

A typical polymerization reaction is described below (Table 2, run 2). A toluene solution (4 ml) of [Ph₃C][B(C₆F₅)₄] (36 mg, 40 µmol) was mixed with a toluene solution (8 ml) of (η⁵-C₅Me₄SiMe₃)Sc(CH₂SiMe₃)₂(THF) ((1): (9.4 mg, 20 µmol) and CpSc(CH₂C6H4Me2-o)₂ ((3): (7.6 mg, 20 µmol) in a 100 mL flask in a glove box at 25 °C. Then, 200 µL TIBA (1 mol/L in hexane, Al/Sc = 5) was added to a reaction mixture, and a resulting mixture reacted for 2 minutes. Further, a monomer mixture containing 0.52 g (5 mmol) styrene and 0.68 g (10 mmol) isoprene in 28 mL toluene was added to the mixture. After a copolymerization reaction was carried out for 2 hours, the flask was taken out from the glove box, and 10 mL methanol was added to the flask so as to terminate the polymerization reaction. A resulting mixture was poured over methanol (400 mL) so as to precipitate a polymer product. A polymer was filtered out and vacuum-dried at 60 °C until the polymer had a given weight. An obtained copolymer was extracted at a room temperature by using THF as a solvent, and no homo-PI was detected.

### <Example 3>

A procedure and conditions for copolymerization of Example 3 (table 2, run 3) are similar to those of Example 2 except that Example 3 increased an amount of TIBA to 400 µL (Al/Sc = 10) and used a monomer mixture containing 1.04 g (10 mmol) styrene and 0.68 g (10 mmol) isoprene.

### <Example 4>

A procedure and conditions for copolymerization of Example 4 (table 2, run 4) are similar to those of Example 2 except that Example 4 increased an amount of TIBA to 400 µL (Al/Sc = 10).

### <Example 5>

A procedure and conditions for copolymerization of Example 5 (table 2, run 5) are similar to those of Example 2 except that Example 5 increased an amount of TIBA to 400 µL (Al/Sc = 10) and used a monomer mixture containing 0.52 g (5 mmol) styrene and 1.36 g (20 mmol) isoprene.
[Table 2]

**Table 2 Block copolymerization of styrene with isoprene in the presence of TIBA. ^{a}**

| Run | Cat. | TIBA/Cat. | Monomer^{b} IP/St | Yield [g] | Conv. [%] | sPS/1,4-IP/3,4-IP^{c} [mol%] | *Mₙ*^{d} [*10^{- 3}] | PDI^{d} | *Tₘ*(*T_{g}*)*^{c}* [°C] |
|---|---|---|---|---|---|---|---|---|---|
| 1 | 1+3 | - | 250/250 | 1.51 | 84 | 45/43/12 | 101.7 | 2.05 | 266(-51,9) |
| 2 | 1+3 | 5 | 250/125 | 1.19 | 100 | 36/62/2 | 103.6 | 1.69 | 272(-59) |
| 3 | 1+3 | 10 | 250/250 | 1.82 | 100 | 50/48/2 | 109.2 | 1.61 | 266(-51,9) |
| 4 | 1+3 | 10 | 250/125 | 1.24 | 100 | 33/64/3 | 86.8 | 1.82 | 269(-58) |
| 5 | 1+3 | 10 | 500/125 | 1.81 | 94 | 19/76/5 | 99.7 | 2.58 | 268(-59) |

| | | | | | | | | | |
|---|---|---|---|---|---|---|---|---|---|
| ^{a} Conditions: Sc (40 µmol), activator (40 µmol), toluene = 40ml, T = 25°C; ^{b} Molar ratio to [Sc]; ^{c} Molar ratio from the ¹H NMR and ¹³C NMR; ^{d} *Mₙ* and PDI (*M_{w}*/*Mₙ)* were determined by GPC using polystyrene standards. ^{e} Measured by differential scanning calorimeter (DSC). | | | | | | | | | |

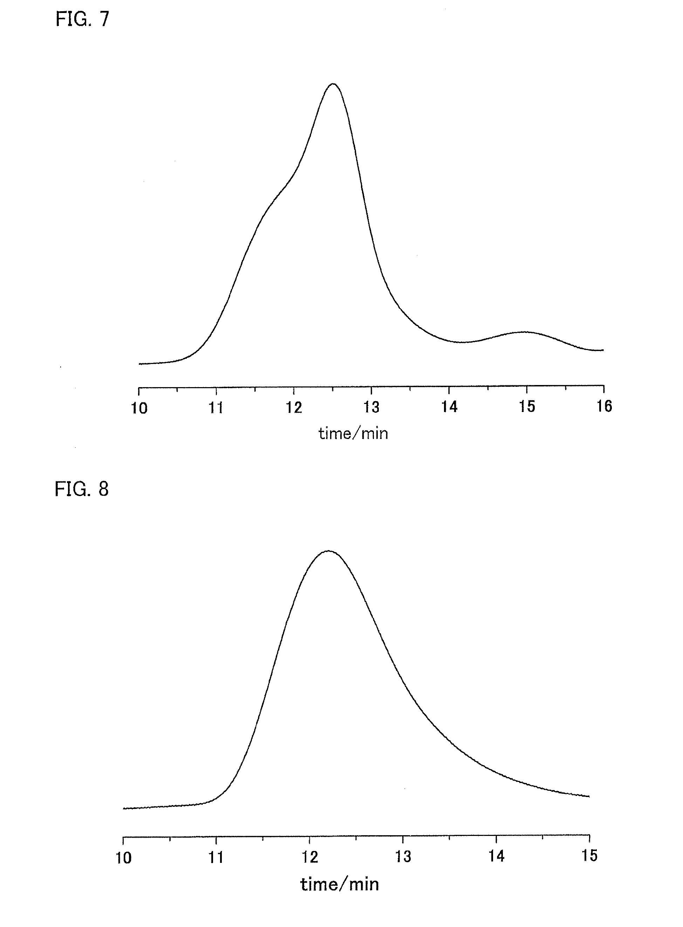

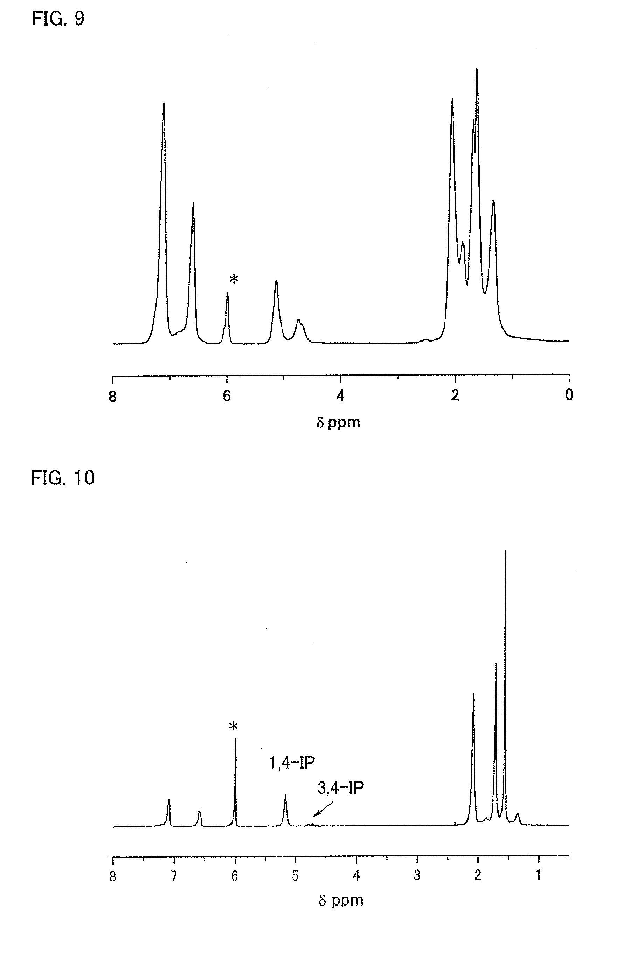

Fig. 7 illustrates a GPC graph of run 1 (with no chain shuttling agent) shown in Table 2. Fig. 8 illustrates a GPC graph of run 2 (TIBA/Sc=5) shown in Table 2. Fig. 9 illustrates a ¹H NMR spectrum of run 1 (with no chain shuttling agent) shown in Table 2. Fig. 10 illustrates a ¹H NMR spectrum of run 2 (TIBA/ Sc=5, IP/St=2) shown in Table 2.

### [Part B: Synthesis of Syndiotactic Polystyrene-block-3,4-polyisoprene Block Copolymer]

As shown in the following Examples 1 through 7, Part B synthesized a syndiotactic polystyrene-block-3,4-polyisoprene block copolymer by use of cationic scandiumalkyl complexes (1) and (4) in the presence of TIBA or TPA. Results of the synthesis, reaction conditions, etc. are shown together in Table 3.

### <Example 1>

A typical polymerization reaction is described below (Table 3, run 1). A toluene solution (4 ml) of [Ph₃C][B(C₆F₅)₄] (36 mg, 40 µmol) was mixed with a toluene solution (8 ml) of (η⁵-C₅Me₄SiMe₃)Sc(CH₂SiMe₃)₂(THF) (a complex (1): 9.4 mg, 20 µmol) and (NCN^{dipp})Sc(CH₂SiMe₃)₂(THF) (a complex (4), NCN^{dipp} = PhC(NC₆H₄iPr₂-2,6)₂) (14 mg, 20 µmol) in a 100 mL flask in a glove box at 25 °C. A resulting mixture was stirred at a room temperature for 2 minutes, and a monomer mixture containing 1.04 g (10 mmol) styrene and 0.68 g (10 mmol) isoprene in 28 mL toluene was added to the flask. After a copolymerization reaction was carried out for 4 hours, the flask was taken out from the glove box, and 10 mL methanol was added to the flask so as to terminate the polymerization reaction. A resulting mixture was poured over methanol (400 mL) so as to precipitate a polymer product. A polymer was filtered out and vacuum-dried at 60 °C until the polymer had a given weight.

### <Example 2>

A typical polymerization reaction is described below (Table 3, run 2). A toluene solution (4 ml) of [Ph₃C][B(C₆F₅)₄] (36 mg, 40 µmol) was mixed with a toluene solution (8 ml) of (η⁵-C₅Me₄SiMe₃)Sc(CH₂SiMe₃)₂(THF) (a complex (1): 9.4 mg, 20 µmol) and (NCN^{dipp})Sc(CH₂SiMe₃)₂(THF) (a complex (4): 14 mg, 20 µmol) in a 100 mL flask in a glove box at 25 °C. Then, 200 µL TIBA (1 mol/L in hexane, Al/Sc = 5) was added to a reaction mixture, and a resulting mixture reacted for 2 minutes. Further, a monomer mixture containing 1.04 g (10 mmol) styrene and 0.68 g (10 mmol) isoprene in 28 mL toluene was added to the mixture. After a copolymerization reaction was carried out for 2 hours, the flask was taken out from the glove box, and 10 mL methanol was added to the flask so as to terminate the polymerization reaction. A resulting mixture was poured over methanol (400 mL) so as to precipitate a polymer product. A polymer was filtered out and vacuum-dried at 60 °C until the polymer had a given weight. An obtained copolymer was extracted at a room temperature by using THF as a solvent, and no homo-PI was detected.

### <Example 3>

A procedure and conditions for copolymerization of Example 3 (table 3, run 3) are similar to those of Example 2 except that Example 3 increased an amount of TIBA to 400 µL (Al/Sc = 10).

### <Example 4>

A procedure and conditions for copolymerization of Example 4 (table 3, run 4) are similar to those of Example 3 except that Example 4 used a monomer mixture containing 1.04 g (10 mmol) styrene and 1.36 g (20 mmol) isoprene.

### <Example 5>

A procedure and conditions for copolymerization of Example 5 (table 3, run 5) are similar to those of Example 2 except that Example 5 increased an amount of TIBA to 800 µL (Al/Sc = 20) and used a monomer mixture containing 1.04 g (10 mmol) styrene and 1.36 g (20 mmol) isoprene.

### <Example 6>

A procedure and conditions for copolymerization of Example 6 (table 3, run 6) are similar to those of Example 2 except that Example 6 used 80 µL tripropyl-aluminum (TPA, 80 µmol, 1 mol/L in hexane, Al/Sc = 2)) instead of TIBA.

### <Example 7>

A procedure and conditions for copolymerization of Example 7 (table 3, run 7) are similar to those of Example 6 except that Example 7 increased an amount of TPA to 200 µL (Al/Sc = 5).
[Table 3]

**Table 3. Block copolymerization of styrene with isoprene in the presence of chain shuttling agent. ^{a}**

| Run | Cat. | CSA/Cat | Monomer ^{b} Ip/St | Yield [g] | Conv. [%] | *s*PS/1,4-IP/3,4-IP^{c} [mol%] | *M*ₙ^{d} [*10⁻³] | *M_{w}*/*Mₙ* ^{d} | *T*ₘ(*T_{g}*)^{e} [°C] |
|---|---|---|---|---|---|---|---|---|---|
| | | TIBA | | | | | | | |
| 1 | 1+2 | - | 250/250 | 1.62 | 94 | 50/12/38 | 63.01 | 2.03 | 253(17) |
| 2 | 1+2 | 5 | 250/250 | 1.72 | 100 | 51/3/46 | 67.2 | 1.79 | 263(22) |
| 3 | 1+2 | 10 | 250/250 | 1.72 | 100 | 50/3/47 | 23.8 | 1.68 | 263(35) |
| 4 | 1+2 | 10 | 500/250 | 2.38 | 99 | 33/4/63 | 27.5 | 2.27 | 266(40) |
| 5 | 1+2 | 20 | 500/250 | 2.24 | 93 | 35/3/62 | 18.0 | 1.85 | 266(36) |
| | | TPA/Cat | | | | | | | |
| 6 | 1+2 | 2 | 250/250 | 1.72 | 100 | 57/10/39 | 37.8 | 2.75 | 263(12) |
| 7 | 1+2 | 5 | 250/250 | 1.72 | 100 | 51/4/45 | 17.4 | 3.46 | 263(11) |

| | | | | | | | | | |
|---|---|---|---|---|---|---|---|---|---|
| ^{a} Conditions: Sc (40 µmol), activator (40 µmol), toluene = 40ml, T = 25°C; ^{b} Molar ratio to [Sc]; ^{c} Molar ratio from the ¹H NMR and ¹³C NMR; ^{d} *Mₙ* and *M_{w}*/*Mₙ* were determined by GPC using polystyrene standards. ^{e} Measured by differential scanning calorimeter (DSC). | | | | | | | | | |

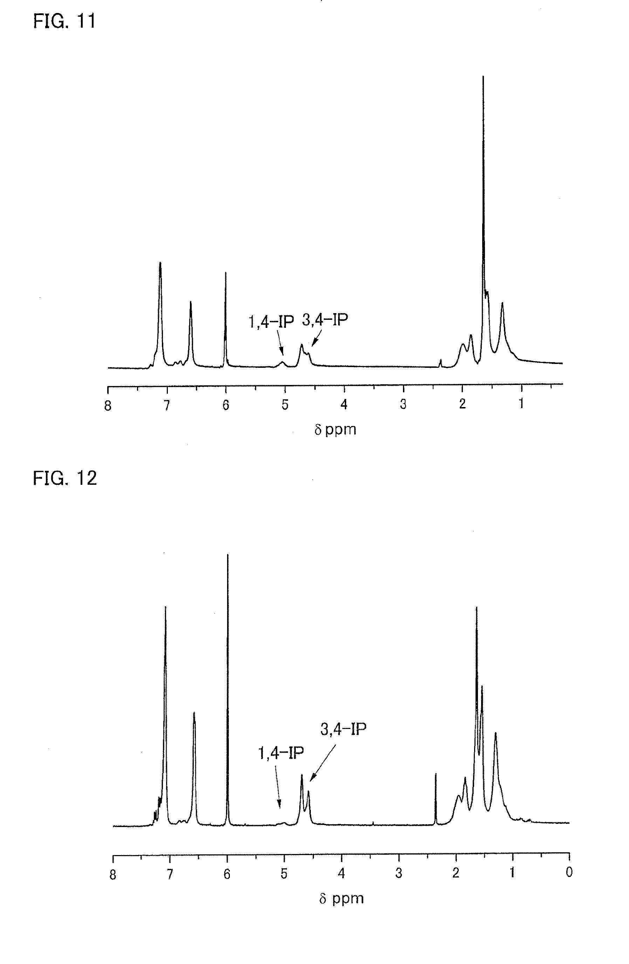

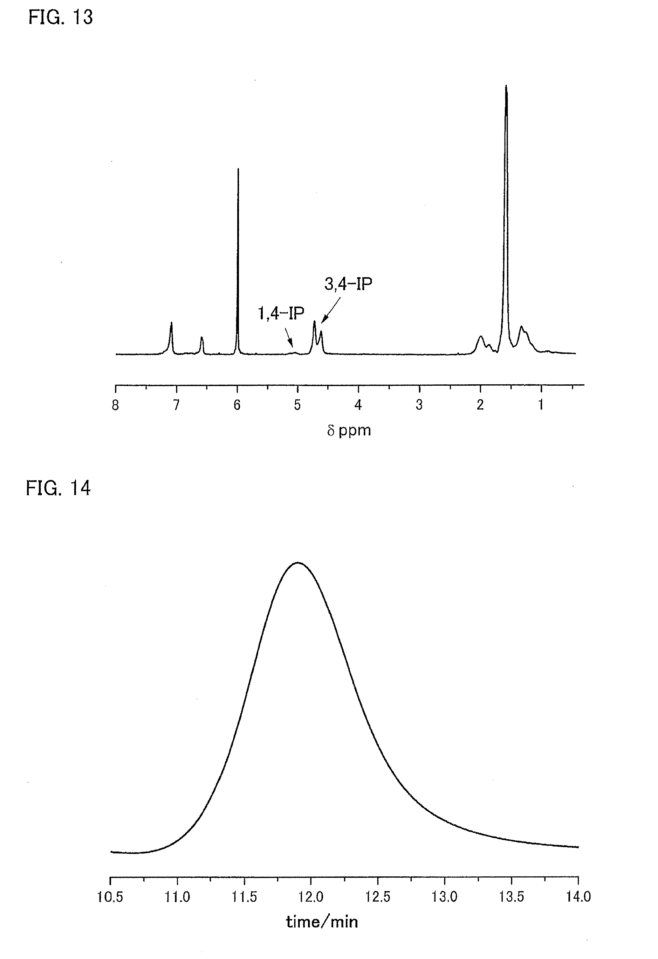

Fig. 11 illustrates a ¹H NMR spectrum of run 1 (with no chain shuttling agent) shown in Table 3. Fig. 12 illustrates a ¹H NMR spectrum of run 3 (TIBA/Sc=10) shown in Table 3. Fig. 13 illustrates a ¹H NMR spectrum of run 7 (TPA/Sc=5) shown in Table 3.

### [Part C: Synthesis of Syndiotactic Polystyrene-block-1,4-polyisoprene-block-1,4-polybutadiene Block Copolymer]

As shown in the following Examples 1 through 7, Part C synthesized a syndiotactic polystyrene-block-1,4-polyisoprene-block-1,4-polybutadiene block copolymer and syndiotactic polystyrene-block-3,4-polyisoprene-block-1,2-polybutadiene by use of cationic scandiumdialkyl complexes (1) and (2) in the presence of TIBA. Results of the synthesis, reaction conditions, etc. are shown together in Table 4.

### <Example 1>

A typical polymerization reaction is described below (Table 4, run 1). A toluene solution (4 ml) of [Ph₃C][B(C₆F₅)₄] (36 mg, 40 µmol) was mixed with a toluene solution (8 ml) of (η⁵-C₅Me₄SiMe₃)Sc(CH₂SiMe₃)₂(THF) (a complex (1): 9.4 mg, 20 µmol) and (η⁵-C₅H₅)Sc(CH₂SiMe₃)₂(THF) (a complex (2) : 7.1 mg, 20 µmol) in a 100 mL flask in a glove box at 25 °C. A resulting mixture was stirred at a room temperature for 2 minutes, and a monomer mixture containing 1.04 g (10 mmol) styrene, 0.68 g (10 mmol) isoprene, and 0.54 g (10 mmol) butadiene in 48 mL toluene was added in the flask. After a copolymerization reaction was carried out for 0.5 hour, the flask was taken out from the glove box, and 10 mL methanol was added to the flask so as to terminate the polymerization reaction. A resulting mixture was poured over methanol (400 mL) so as to precipitate a polymer product. A polymer was filtered out and vacuum-dried at 60 °C until the polymer had a given weight.

### <Example 2>

A typical polymerization reaction is described below (Table 4, run 2). A toluene solution (4 ml) of [Ph₃C][B(C₆Fs)₄] (36 mg, 40 µmol) was mixed with a toluene solution (8 ml) of (η⁵-C₅Me₄SiMe₃)Sc(CH₂SiMe₃)₂(THF) (a complex (1): 9.4 mg, 20 µmol) and (NCN^{dipp})Sc(CH₂SiMe₃)₂(THF) (a complex (4): 14 mg, 20 µmol) in a 100 mL flask in a glove box at 25 °C. Then, 200 µL TIBA (1 mol/L in hexane, Al/Sc = 5) was added to a reaction mixture, and a resulting mixture reacted for 2 minutes. Further, a monomer mixture containing 1.04 g (10 mmol) styrene, 0.68 g (10 mmol) isoprene, and 0.54 g (10 mmol) butadiene in 48 mL toluene was added. After a copolymerization reaction was carried out for 5 minutes, the flask was taken out from the glove box, and 10 mL methanol was added to the flask so as to terminate the polymerization reaction. A resulting mixture was poured over methanol (400 mL) so as to precipitate a polymer product. A polymer was filtered out and vacuum-dried at 60 °C until the polymer had a given weight. An obtained copolymer was extracted at a room temperature by using THF as a solvent, and no homo-PI was detected.

### <Example 3>

A procedure and conditions for copolymerization of Example 3 (table 4, run 3) are similar to those of Example 2 except that Example 3 increased an amount of TIBA to 400 µL (Al/Sc = 10) and carried out the polymerization for 10 minutes.

### <Example 4>

A procedure and conditions for copolymerization of Example 4 (table 4, run 4) are similar to those of Example 3 except that Example 4 used a monomer mixture containing 1.04 g (10 mmol) styrene, and 0. 68 g (10 mmol) isoprene, and 1.14 g (20 mmol) butadiene.

### <Example 5>

A procedure and conditions for copolymerization of Example 5 (table 4, run 5) are similar to those of Example 2 except that Example 5 used a monomer mixture containing 1.04 g (10 mmol) styrene, 1.36 g (20 mmol) isoprene, and 0.57 g (10 mmol) butadiene.

### <Example 6>

A procedure and conditions for copolymerization of Example 6 (table 4, run 6) are similar to those of Example 1 except that Example 6 used a catalyst containing (η⁵-C₅Me₄SiMe₃)Sc(CH₂SiMe₃)₂(THF) (a complex (1): 9.4 mg, 20 µmol) and (NCN^{dipp})Sc(CH₂SiMe₃)₂(THF) (a complex (4), NCN^{dipp} = PhC(NC₆H₄iPr₂-2,6)₂) (14 mg, 20 µmol).

### <Example 7>

A procedure and conditions for copolymerization of Example 7 (table 4, run 7) are similar to those of Example 2 except that Example 7 used a catalyst containing the complex (1) (9.4 mg, 20 µmol) and the complex (4) (NCN^{dipp} = PhC(NC₆H₄iPr₂-2,6)₂) (14 mg, 20 µmol) and carried out the polymerization for 30 minutes.
[Table 4]

**Table 4. Block copolymerization of styrene with isoprene and butadiene in the presence of TIBA.^{a}**

| Run | Cat. | Monomer*^{b}* St/IP/BD | Al/[Sc] | Time [min] | Conv. [%] | *M*ₙ*^{c}* [kg/m ol] | PDT *^{c}* | *s*PS/1, 4-PI/3, 4-PI/1, 4-PB/1, 2-PB*^{d}* | *T*ₘ(*T*_{g})*^{e}* [°C] |
|---|---|---|---|---|---|---|---|---|---|
| 1 | 1+2 | 500/500/500 | 0 | 30 | 30 | 92.6 | 1.5 2 | (*a*PS)2/22/6/65/5 | (-82,-21) |
| 2 | 1+2 | 500/500/500 | 5 | 10 | 100 | 166.8 | 1.3 8 | 34/32/1/32/1 | 267 (-77) |
| 3 | 1+2 | 500/500/500 | 10 | 10 | 100 | 94.4 | 1.5 0 | 34/32/1/32/1 | 266 (-76) |
| 4 | 1+2 | 500/500/1000 | 5 | 10 | 100 | 134.6 | 1.6 9 | 25/24/1/49/1 | 270 (-72) |
| 5 | 1+2 | 500/1000/500 | 5 | 10 | 100 | 136.2 | 1.9 1 | 25/48/2/24/1 | 270 (-88) |
| 6 | 1+4 | 500/500/500 | 0 | 30 | 31 | 17.5 | 1.5 9 | (*a*PS)1/2/17/14/66 | (1) |
| 7 | 1+4 | 500/500/500 | 5 | 30 | 100 | 71.8 | 2.4 7 | 34/4/29/5/28 | 265 (5) |

| | | | | | | | | | |
|---|---|---|---|---|---|---|---|---|---|
| ^{a} Conditions: Sc (40 µmol), activator (40 µmol), toluene = 60ml, T = 25°C; ^{b}Molar ratio to [Sc]; ^{c} *Mₙ* and PDI (*M_{w}*/*Mₙ*) were determined by GPC using polystyrene standards. ^{d}Molar ratio from the ¹³C NMR; ^{e} Measured by differential scanning calorimeter (DSC). | | | | | | | | | |

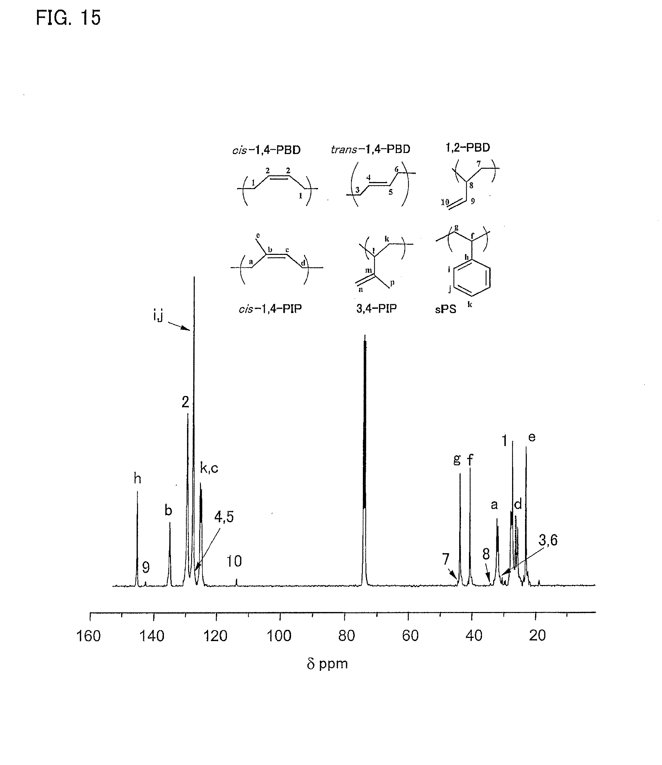

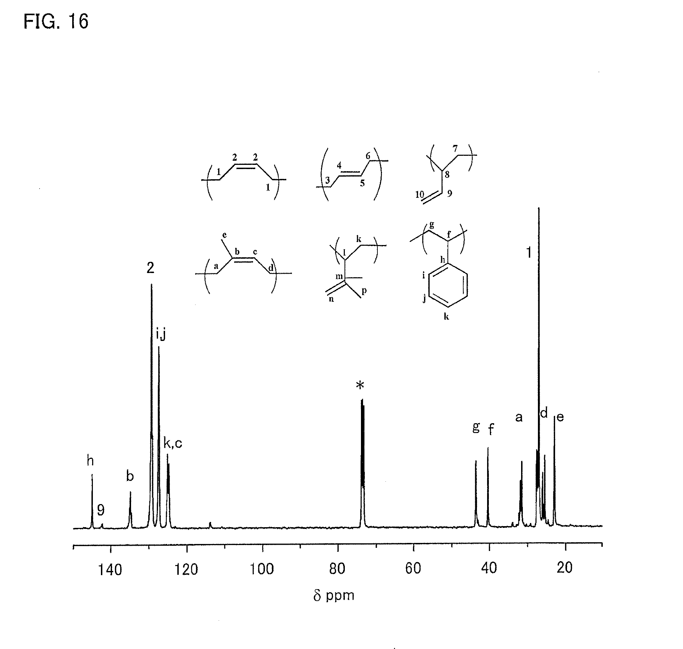

Fig. 14 illustrates a GPC graph of run 2 (TIBA/Sc=5) shown in Table 4. Fig. 15 illustrates a ¹³C NMR spectrum of run 2 (TIBA/Sc=5) shown in Table 4. Fig. 16 illustrates a ¹³C NMR spectrum of run 4 shown in Table 4.

Note that Fig. 17 illustrates respective structural formulae of the complexes cationic scandiumdialkyl complexes (1), (2), and (4), and the scandium aminobenzyl complex (3) each used in the above Examples, respective general reactions with the complexes, and respective reactions with the complexes in the Examples. In Fig. 17, complexes 1, 2, and 4 correspond to the respective cationic scandiumdialkyl complexes (1), (2), and (4), and a complex 3 corresponds to the scandium aminobenzyl complex (3).

### [Reference Example: Consideration of Influence of Structure of Ligand on Stereoregularity of Polystyrene]

### <Homopolymerization of Styrene Using Various Catalysts>

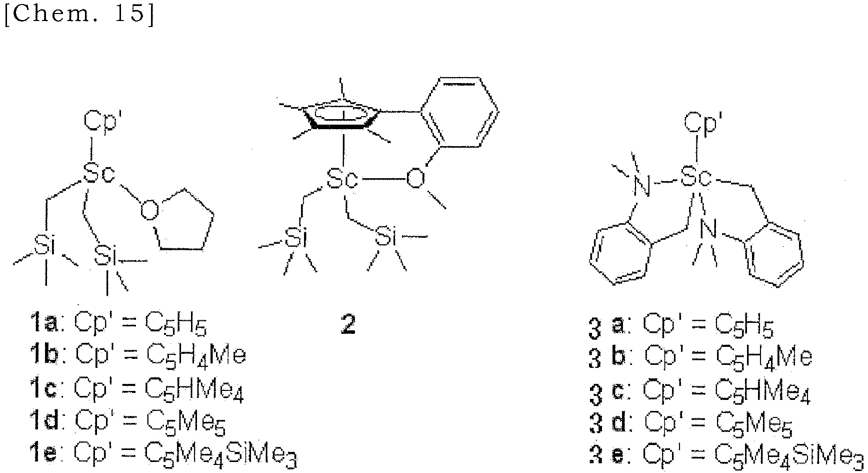

The metal complexes (halfsandwich scandiumdialkyl complexes) 1a through 1e, 2, and 3a through 3e were used to homopolymerize a styrene, and Table 5 shows typical results of the homopolymerization. Note that reaction conditions for the homopolymerization are outlined at the bottom of Table 5.
[Table 5]

**Table 5.: Homoplymerization of Styrenes**

| Run | Cat. | Time(min) | Yield(%) | Activity*^{b}* | sPS/%*^{c}* | *M*ₙ(×10⁴)*^{d}* | *M*_{w}/*Mₙ^{d}* | *T*_{g}*^{e}*(°C) | *T*ₘ*^{e}*(°C) |
|---|---|---|---|---|---|---|---|---|---|
| 1 | - | 240 | 70 | 12 | 0 | 0.1 | 3.84 | 62 | - |
| 2 | **1a** | 240 | 9 | 1.1 | 0 | 0.7 | 2.08 | 94 | 94 |
| 3 | **1b** | 240 | 20 | 2.6 | 0 | 1.3 | 1.76 | 92 | - |
| 4 | **1c** | 120 | 92 | 24 | 100 | 9.7 | 1.57 | - | 269 |
| 5 | **1d** | 1 | 96 | 3000 | 100 | 8.9 | 1.29 | - | 271 |
| 6 | **1e** | 1 | 100 | 3125 | 100 | 9.8 | 1.25 | - | 274 |
| 7 | **2** | 1 | 100 | 3125 | 100 | 9.8 | 1.25 | - | 274 |
| 8 | **3a** | 35 | 73 | 65 | 0 | 4.1 | 2.10 | 94 | - |
| 9 | **3b** | 35 | 94 | 84 | trace | 4.6 | 2.04 | - | 230 |
| 10 | **3c** | 25 | 95 | 119 | 100 | 6.8 | 2.46 | - | 271 |
| 11 | **3d** | 1 | 100 | 3125 | 100 | 24.3 | 1.69 | - | 271 |
| 12 | **3e** | 1 | 100 | 3125 | 100 | 25.2 | 1.53 | - | 271 |

| | | | | | | | | | |
|---|---|---|---|---|---|---|---|---|---|
| *^{a}* Conditions: Sc, 25 *µ*mol; [Ph₃C] [B(C₆F₅)₄], 25 *µ*mol; styrene, 12.5 mmol; toluene, 8 mL; 25 °C. *^{b}* Given in kg of polymer/(mol-Sc·h). *^{c}* sPS = syndiotactic polystyrene. *^{d}* Determined by GPC in 1,2-dichlorobenzene at 145 ° C against polystyrene standard. *^{e}* Determined by DSC. | | | | | | | | | |

In a case where only [Ph₃C][B(C₆F₅)₄] but no metal complex was added to a reaction system, atactic polystyrene having a small molecular weight (Mₙ = 1000) was obtained, and the obtained atactic polystyrene had an extremely broad molecular weight distribution (M_{w/}Mₙ = 3.84) (Table 5, Run 1).

In a case where the metal complexes 1a and 1b were used which are similar in structure in that the metal complexes each contained THF and a relatively small ligand Cp¹, atactic polystyrene was obtained (Table 5, Runs 2 and 3). Note that the metal complexes 1a and 1b had low catalytic activity for polystyrene synthesis.

In a case where the metal complexes 3a and 3b were used each of which contained no THF but a relatively small ligand Cp¹, the metal complexes 3a and 3b had slightly high catalytic activity for polystyrene synthesis under identical reaction conditions though the ligand Cp¹ is identical to that of each of the metal complexes 1a and 1b. However, obtained polystyrene was also atactic (Table 5, Runs 8 and 9).

Meanwhile, a greater influence of steric hindrance of a larger ligand Cp¹ caused (i) extremely higher catalytic activity for polystyrene synthesis and (ii) remarkably higher selectivity to a syndiotactic stereostructure. In particular, it was revealed that the metal complexes 1d, 1e, 3d, and 3e were particularly preferable to synthesize syndiotactic polystyrene from the viewpoint of their catalyst activity and stereoselectivity (see Table 5, Runs 4 to 6, and also Runs 10 to 12).

The metal complex 2, which is a methoxyphenyl-bonded metal complex, also had, under identical reaction conditions, (i) extremely high catalytic activity for polystyrene synthesis and (ii) remarkably high selectivity to a syndiotactic stereostructure.

Note that the metal complexes 1a, 1b, 3a, and 3b are more excellent in reactivity to isoprene or butadiene though no data is shown. This makes it possible to obtain a polymer which provides given positional regularity or stereoregularity.

### <Example of Preparation of Metal Complex>

The metal complex 3b ((C₅H₄Me)Sc(CH₂C₆H₄NMe₂-o)₂) was prepared as below.

A THF solution (12 mL) of Sc(CH₂C₆H₄NMe₂-o)₃ (1.792 g, 4.000 mmol) was added to a THF solution (6 mL) of C₅H₅Me (0.317 g, 4.800 mmol) in a Schlenk tube with a Teflon (Registered Trademark) cock in a glove box. The Schlenk tube was taken out from the glove box and heated at 40 °C for 2 hours. A solvent was removed under a reduced pressure. An obtained residue was hexane-extracted. Yellow crystals (1.255 g, 80% yield) of the complex 3b ((C₅H₄Me)Sc(CH₂C₆H₄NMe₂-o)₂) was obtained from a concentrated hexane solution at -30 °C.
¹H NMR (C₆D₆, 50 °C): 1.43 (s, 4H, CH₂), 2.08 (s, 3H, C₅H₄Me), 2.34 (s, 12H, NMe₂), 5.26 (s, 2H, C₅H₄Me), 5.82 (t, 2H, C₅H₄Me), 6.73 (2H, aryl), 6.85 (2H, aryl), 7.05 (4H, aryl). ¹³C NMR (C₆D₆, 25 °C): 14.9 (C₅H₄Me), 45.0 (CH₂), 46.8 (NMe₂), 112.4, 117.2, 120.9, 124.1, 126.9, 130.1, 144.0, 146.0 (aromatics and Cp ring carbons). Anal. Calcd. for C₂₄H₃₁ScN₂: C 73.45; H 7.96; N 7.14. Found: C 73.50; H 7.95; N 7.23.

### Industrial Applicability

The present invention makes it possible to provide (i) a highly positionally controlled or stereocontrolled multidimensional polymer and (ii) a method for producing the multidimensional polymer.

## Claims

1. A multidimensional polymer production method for producing a multidimensional polymer containing a repeating unit derived from a first monomer and a repeating unit derived from a second monomer different from the first monomer, said multidimensional polymer production method comprising the steps of:
(a) using a first catalyst and a second catalyst; and
(b) carrying out a polymerization reaction in the presence of the first catalyst, the second catalyst, the first monomer, the second monomer, and a chain shuttling agent in an identical reaction system,
the first catalyst more selectively catalyzing a positionally selective or stereoselective polymerization reaction of the first monomer per se than catalyzing a polymerization reaction of the second monomer per se and a polymerization reaction of the first monomer and the second monomer, and
the second catalyst more selectively catalyzing a positionally selective or stereoselective polymerization reaction of the second monomer per se than catalyzing a polymerization reaction of the first monomer per se and the polymerization reaction of the first monomer and the second monomer.

2. The multidimensional polymer production method as set forth in claim 1, wherein the first monomer is a styrene-type monomer and the second monomer is an isoprene or a butadiene.

3. The multidimensional polymer production method as set forth in claim 2, wherein the first catalyst is a catalyst composition containing:
(1) a metallocene complex containing: a central metal M which is a group 3 metal atom or a lanthanoid metal atom; a ligand Cp* containing a substituted or unsubstituted cyclopentadienyl derivative bonded with the central metal M; monoanion ligands Q¹ and Q²; and a neutral Lewis base(s) L whose number is W (W is an integer of 0 to 3); and
(2) an ionic compound containing a noncoordinating anion and a cation,
the metallocene complex being represented by general formula (I): 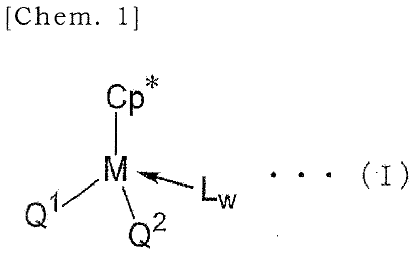 wherein the ligand Cp* is any one selected from the group consisting of a substituted cyclopentadienyl ring, a substituted or unsubstituted fluorenyl ring, a substituted or unsubstituted octahydrofluorenyl ring; and an indenyl ring containing a substituent;
in a case where Cp* is the substituted cyclopentadienyl ring, Cp* is represented by the following general formula (II): 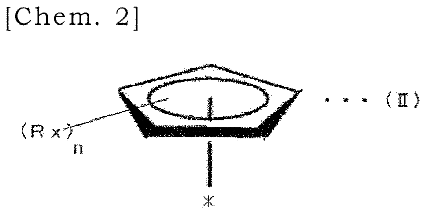 wherein Rx represents a C₁ to C₂₀ hydrocarbyl group or a metalloid group which is substituted by the C₁ to C₂₀ hydrocarbyl group, the C₁ to C₂₀ hydrocarbyl group or the metalloid group being bonded with a carbon atom in a skeleton of the cyclopentadienyl ring; * represents a bond with M; n is an integer of 3 to 5; and one of the carbon atoms constituting the skeleton of the cyclopentadienyl ring represented by general formula (II) may be substituted by a group 14 atom (excluding a carbon atom and a lead atom) or a group 15 atom; and
in a case where Cp* is an indenyl ring containing a substituent, Cp* is represented by the following general formula (III): 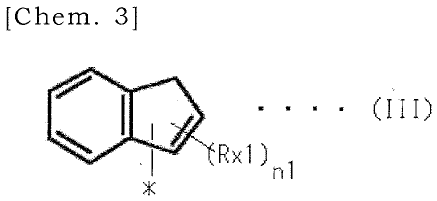 wherein Rx1 represents a C₁ to C₂₀ hydrocarbyl group or a metalloid group which is substituted by the C₁ to C₂₀ hydrocarbyl group, the C₁ to C₂₀ hydrocarbyl group or the metalloid group being bonded with carbon atoms constituting a skeleton of 5 membered rings of the indenyl ring; * represents a bond with M; and n1 is an integer of 1 to 3.

4. The multidimensional polymer production method as set forth in claim 2 or 3, wherein the second catalyst is a catalyst composition containing:
(1) a metallocene complex containing: a central metal M which is a group 3 metal atom or a lanthanoid metal atom; a ligand Cp* containing a substituted or unsubstituted cyclopentadienyl derivative bonded with the central metal M; monoanion ligands Q¹ and Q²; and a neutral Lewis base(s) L whose number is W (W is an integer of 0 to 3); and
(2) an ionic compound containing a noncoordinating anion and a cation,
the metallocene complex being represented by general formula (I): 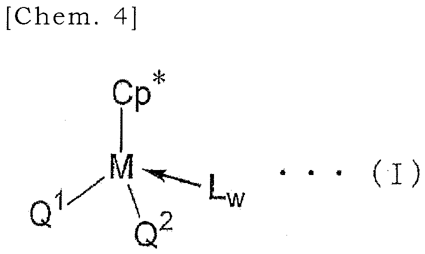 wherein the ligand Cp* is any one selected from the group consisting of a substituted or unsubstituted cyclopentadienyl ring and an unsubstituted indenyl ring; and
in a case where Cp* is the substituted cyclopentadienyl ring, Cp* is represented by the following general formula (IV): 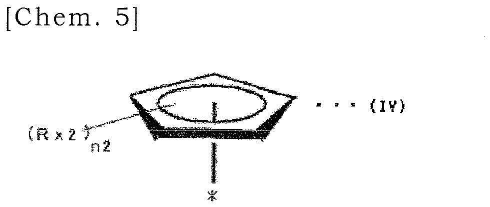 wherein Rx2 represents a C₁ to C₃ hydrocarbyl group bonded with a carbon atom in a skeleton of the cyclopentadienyl ring; * represents a bond with M; and n2 is an integer of 1 to 2.

5. The multidimensional polymer production method as set forth in claim 2 or 3, wherein the second catalyst is a catalyst composition containing:
(1) a complex; and
(2) an ionic compound containing a noncoordinating anion and a cation,
the complex being represented by general formula (V): 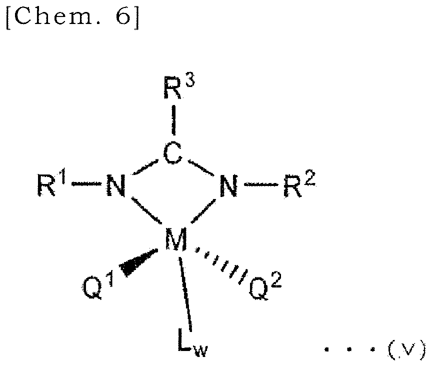
wherein R¹ and R² independently represent an alkyl group; or a cyclohexyl group, an aryl group, or an aralkyl group;
R³ represents an alkyl group; an alkenyl group; an alkynyl group; an aryl group or an aralkyl group; an aliphatic, aromatic, or cyclic amino group; a phosphino group; a boryl group; an alkylthio or arylthio group; or an alkoxy or aryloxy group;
M is scandium (Sc), yttrium (Y), or any one of rare earth elements from lanthanum (La) to lutetium (Lu) except promethium Pm; and
Q¹ and Q² independently represent a monoanion ligand, L represents a neutral Lewis base(s), and w is an integer of 0 to 3.

6. The multidimensional polymer production method as set forth in claim 5, wherein in the general formula (V), R¹ and R² each represent a 2,6-diisopropylphenyl group and R³ is a phenyl group.

7. The multidimensional polymer production method as set forth in claim 2 or 3, wherein the second catalyst is a catalyst composition containing:
(1) a complex containing: a central metal M which is a group 3 metal atom or a lanthanoid metal atom; and a ligand Cp* containing a substituted or unsubstituted cyclopentadienyl derivative bonded with the central metal M; and
(2) an ionic compound containing a noncoordinating anion and a cation,
the complex being represented by general formula (VI): 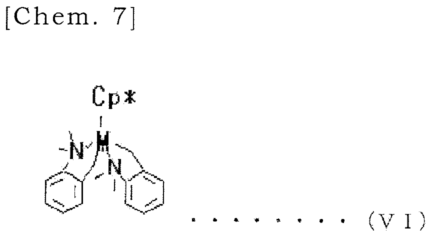 wherein the ligand Cp* is any one selected from the group consisting of a substituted or unsubstituted cyclopentadienyl ring and an unsubstituted indenyl ring; and
in a case where Cp* is the substituted cyclopentadienyl ring, Cp* is represented by the following general formula (IV): 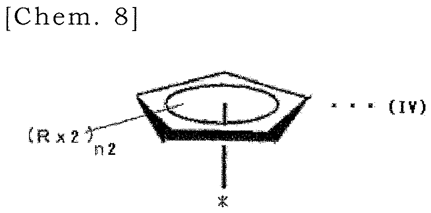 wherein Rx2 represents a C₁ to C₃ hydrocarbyl group bonded with a carbon atom in a skeleton of the cyclopentadienyl ring; * represents a bond with M; and n2 is an integer of 1 to 2.

8. The multidimensional polymer production method as set forth in any one of claims 3 through 7, wherein the central metal M is scandium (Sc) or yttrium (Y).

9. The multidimensional polymer production method as set forth in claim 8, wherein the central metal M is scandium (Sc).

10. The multidimensional polymer production method as set forth in any one of claims 3 through 6, wherein Q¹ and Q² independently represent a trialkylsilyl group.

11. The multidimensional polymer production method as set forth in any one of claims 3 through 6, wherein the neutral Lewis base(s) L is/are tetrahydrofuran(s).

12. The multidimensional polymer production method as set forth in any one of claims 2 through 11, wherein a polymer block obtained by polymerizing the styrene-type monomer per se has a side chain which contains aromatic groups having syndiotactic stereoregularity, and syndiotacticity exhibited by the polymer block is not less than 80 rrrr%.

13. The multidimensional polymer production method as set forth in any one of claims 2 through 12, wherein a polymer block obtained by polymerizing the styrene-type monomer per se is poly(alkylated) styrene or polyvinyl naphthalene.

14. The multidimensional polymer production method as set forth in any one of claims 2 through 13, wherein the chain shuttling agent is trialkylaluminum.

15. A multidimensional polymer which is produced by a multidimensional polymer production method recited in any one of claims 1 through 14, said multidimensional polymer comprising:
a first polymer block obtained by polymerizing the first monomer per se; and
a second polymer block obtained by polymerizing the second monomer per se,
the first polymer block and the second polymer block each having given positional regularity or stereoregularity.
